# FASCICULE DE BREVET EUROPEEN

(11) **EP 1 314 143 B1**
(45) Date de publication et mention de la délivrance du brevet: **11.05.2005**
(21) Numéro de dépôt: 01969842.2
(22) Date de dépôt: 30.08.2001
(51) Int. Cl.: G07F 19/00, G06F 17/60

(54) **DISPOSITIF ET PROCEDE DE SAUVEGARDE D'INFORMATION DE TRANSACTION EN LIGNE**
ANLAGE UND VERFAHREN ZUR INFORMATIONSSICHERUNG BEI ON-LINE-TRANSAKTIONEN
ONLINE TRANSACTION INFORMATION BACKUP METHOD AND DEVICE

(30) Priorité: 30.08.2000 WO PCT/IB00/01312
(43) Date de publication de la demande: 28.05.2003
(60) Demande divisionnaire: 04012145.1
(73) Titulaire: CORNUEJOLS, Georges, 75017 Paris (FR)
(72) Inventeur: CORNUEJOLS, Georges, 75017 Paris (FR)
(86) Numéro de dépôt international: PCT/FR2001/002705
(87) Numéro de publication internationale: WO 2002/019287

(56) Documents cités:
- EP-A- 0 969 430
- US-A- 5 960 411
- HERDA S: "Non-repudiation: Constituting evidence and proof in digital cooperation" COMPUTER STANDARDS AND INTERFACES, ELSEVIER SEQUOIA. LAUSANNE, CH, vol. 17, no. 1, 1995, pages 69-79, XP004046750 ISSN: 0920-5489
- SUNG-WOO TAK ET AL: "Modeling and Design of Notarial system supporting Secure Transactions in Electronic Commerce based on the Internet" PROCEEDINGS. INTERNATIONAL CONFERENCE ON INFORMATION NETWORKING, XX, XX, 21 janvier 1998 (1998-01-21), pages 257-260, XP002118185

## Description

La présente invention concerne un dispositif et un procédé de sauvegarde d'information de transaction en ligne. Elle s'applique, en particulier, aux transactions effectuées par l'intermédiaire d'un réseau de communication informatique, par exemple, Internet.

Un utilisateur d'un réseau de communication, par exemple l'Internet, ressent un certain inconfort lorsqu'il s'aventure sur ce réseau. Il ne peut garder de traces organisées des pages informatiques qu'il reçoit, des engagements du site marchand, des lois applicables à la transaction et, finalement il se sent en insécurité au cours de ses achats en ligne.

Les utilisateurs d'un tel réseau sont mal protégés contre des abus de la part de tiers, en particulier des sites informatiques, commerciaux ou administratifs. Dans le document EP-A-96943, un tiers témoin stocke les détails de la transaction.

La présente invention entend remédier à ces inconvénients.

La présente invention vise un procédé de sauvegarde d'information de transaction comportant
- une opération de détection de début de visite d'un site distant,
- une opération de détection d'une transaction comportant au moins l'une des opérations suivantes :
   - la mise en oeuvre d'une méthode d'authentification ou de signature électronique à clés asymétrique de l'utilisateur,
   - la détection d'au moins une séquence de symboles prédéterminée dans une page reçue de la part du site, et
   - la détermination qu'une adresse de page ou un nom de domaine du site distant correspond à au moins une adresse prédéterminée,
- et, lorsqu'une transaction est détectée, une opération de mémorisation en mémoire non volatile, d'une trace de pages dudit site distant.

Grâce à ces dispositions, la visite d'un site distant est détectée et, lorsqu'une transaction mettant en oeuvre une authentification ou signature électronique à clés asymétriques ou une page de site suggérant qu'une transaction a lieu, soit par son contenu, soit par son adresse, la conservation automatique de la trace de pages dudit site permet ultérieurement à l'utilisateur de se référer à cette trace en cas de problème relatif à ladite transaction.

On observe que l'authentification ou la signature sont, conformément à la présente invention, à clés asymétriques, par exemple conformes à l'infrastructure à clés publique PKI. La présente invention ne concerne pas les authentifications vis-à-vis d'un terminal de l'utilisateur qui ne mettraient pas en oeuvre de clés asymétriques, par exemple les authentifications par mesure biométrique, à carte à puce ou à code confidentiel. En effet, ces derniers types d'authentification ne sont pas conformes aux lois sur la signature électronique et n'engagent donc pas légalement un acheteur en ligne (elles se limitent généralement à accéder à une ressource, le terminal de l'utilisateur ou un compte client sur un site, et ne permettent pas d'effectuer une transaction.) De plus, techniquement, l'utilisation de clés asymétriques permet au site de vérifier immédiatement l'identité du contractant ou du déclarant par utilisation d'une clé dite " publique " , généralement disponible en ligne.

Selon des caractéristiques particulières, c'est-à-dire dans des variantes ou des modes de réalisation exemplaires, à partir de l'opération de détection de début de visite, une opération de constitution de ladite trace est effectuée avant la détection d'une transaction, et lorsque aucune transaction n'est détectée, la trace constituée est automatiquement effacée.

On observe que l'effacement de ladite trace peut être effectué soit immédiatement lors d'une détection de sortie dudit site ou ultérieurement, par exemple au bout d'une durée prédéterminée ou en fonction d'un espace mémoire disponible pour conserver des traces de visite et/ou de transactions.

Selon des caractéristiques particulières, le procédé tel que succinctement exposé ci-dessus comporte une opération de détection de fin de transaction, par détection de la sortie du site visite et de sites prédéterminés liés audit site visité. Les sites liés peuvent être, par exemple, des sites de paiement ou sites auxquels on accède par un lien sur ledit site visité, ces sites ou certaines pages de ces sites étant, par exemple repérés dans une base de données en correspondance avec ledit site visité. Grâce à ces dispositions, non seulement le début, mais aussi la fin de la transaction sont automatiquement déterminés.

Selon des caractéristiques particulières, la détermination qu'une adresse de page ou un nom de domaine du site distant correspond à au moins une adresse prédéterminée comporte la détection qu'une racine d'adresse correspond à un mode de communication encrypté. En effet, l'inventeur a découvert que ce mode de communication est généralement signe d'une transaction.

Selon des caractéristiques particulières, la détermination qu'une adresse de page ou un nom de domaine du site distant correspond à au moins une adresse prédéterminée comporte la détection que ladite adresse ou ledit nom de domaine correspond à une séquence de symboles conservée dans une base de données.

Selon des caractéristiques particulières, la détermination qu'une adresse de page ou un nom de domaine du site distant correspond à au mois une adresse prédéterminée comporte la détermination de ce que le site distant est répertorié dans une base de données et :
- si le site distant est répertorié dans la base de données, la détermination de ce qu'une adresse de page ou un nom de domaine de site visité correspond à au moins une adresse de page ou un nom de domaine conservé dans ladite base de données en relation avec un identifiant dudit site distant, et
- si le site distant n'est pas répertorié dans la base de données, la détermination de la mise en oeuvre d'un mode de communication encrypté et/ou de la visite d'une page d'un autre site que ledit site distant correspond à un site de transaction prédéterminé.

Grâce à chacune de ces dispositions, la détection de transaction est de mise en oeuvre simple et efficace, même pour des sites inconnus de la base de données. Par exemple le site de transaction prédéterminé est un site de paiement auquel on accède depuis de nombreux sites commerciaux ou administratifs.

Selon des caractéristiques particulières, l'opération de détection de début de visite comporte une opération de détermination d'une adresse de page visitée et au moins l'une des opérations suivantes:
- une opération de détermination que cette adresse correspond à une page d'un site différent du site précédemment visité ; et
- une opération de comparaison de ladite adresse avec des adresses conservées dans une base de données.

Grâce à ces dispositions, lorsqu'un utilisateur accède à un nouveau site distant indépendant du site qu'il n'était pas déjà en train de visiter, la détection de début de visite du nouveau site est déterminée par traitement de l'adresse de la page accédée. Ainsi, il n'est pas nécessaire que le site émette une information spécifique pour que le début de visite soit détecté.

Selon des caractéristiques particulières, au cours de l'opération de mémorisation en mémoire non volatile, la trace de pages visitées est représentative de toutes les pages du site distant qui ont été visitées depuis l'opération de détection de début de visite. Ainsi, la trace mémorisée concerne toutes les pages visitées et non seulement certaines pages de telle manière que sa représentativité de la transaction est élevée.

Selon des caractéristiques particulières, le procédé comporte une opération de sélection par un utilisateur de la conservation ou non de traces de toutes visites sur au moins un site prédéterminé et, lorsque aucune transaction n'est détectée, ladite opération de mémorisation en mémoire non volatile n'est effectuée que si, pour ledit site distant, l'utilisateur a choisi qu'une trace soit mémorisée, au cours de ladite opération de sélection. Grâce à chacune de ces dispositions, aucune mémoire n'est encombrée par des traces de visites inutiles.

Selon des caractéristiques particulières, le procédé comporte, lorsqu'une transaction est détectée, une opération de mise à disposition de l'utilisateur d'information contextuelle dépendant dudit site distant. Selon des caractéristiques particulières, lorsqu'une opération de mémorisation en mémoire non volatile d'une trace de pages visitées sur ledit site est effectuée, une trace d'au moins une page prédéterminée dudit site est mémorisée, même si ladite page prédéterminée n'a pas été visitée. Grâce à chacune de ces dispositions, lorsqu'une transaction est détectée, l'utilisateur dispose, dans la trace mémorisée, d'information complémentaire à celle des pages qu'il a visitées.

Selon des caractéristiques particulières, lorsqu'une authentification ou une signature électronique à clés asymétriques est mise en oeuvre, au cours d'une opération d'édition, au moins une portion de page dudit site distant est sélectionnée par le signataire et incorporée au document signé. Grâce à ces dispositions, l'utilisateur peut incorporer dans un bon de commande ou une déclaration signé, les éléments sur lesquels l'utilisateur a fondé sa décision de signer, par exemple une image d'un objet, des conditions générales de ventes, une notice administrative ou des spécifications d'un produit ou d'un service.

Selon des caractéristiques particulières, au cours de ladite opération de mémorisation en mémoire non volatile, et pour au moins un site distant prédéterminé, une trace de pages d'un site précédemment visité est mémorisée. Ainsi, si le site distant prédéterminé visité sur lequel une détection de transaction est effectuée correspond à un organisme de paiement ou de signature électronique, une trace du site depuis lequel l'utilisateur a atteint ce site prédéterminé est mémorisée.

Selon des caractéristiques particulières, au cours de l'opération de mémorisation en mémoire non volatile, ladite trace de pages visitées comporte une information de quelles parties de ladite page ont été affichées à l'utilisateur. Selon des caractéristiques particulières, au cours de l'opération de mémorisation en mémoire non volatile, ladite trace de pages visitées ne représente que des parties de pages qui ont été affichées. Grâce à chacune de ces dispositions, ladite trace mise en mémoire atteste des informations sur lesquelles l'utilisateur a donné son consentement d'effectuer une transaction.

Selon des caractéristiques particulières, ladite opération de mémorisation en mémoire non volatile comporte une opération de compression d'images affichées sur un écran accessible à un utilisateur. Grâce à chacune de ces dispositions, la trace mémorisée est de dimension réduite.

Selon des caractéristiques particulières, l'opération de mémorisation en mémoire non volatile comporte une opération de transmission de ladite trace ou d'un certificat d'intégrité de ladite trace (par exemple un condensât, un code de redondance ou une somme de vérification) à une mémoire distante. Grâce à ces dispositions, ladite trace peut être conservée par l'utilisateur en un lieu de son choix.

Selon des caractéristiques particulières, le procédé tel que succinctement exposé ci-dessus comporte une opération de transmission audit site distant d'un signal prédéterminé représentatif de la mise en oeuvre dudit procédé. Grâce à ces dispositions, l'utilisateur, d'une part, et le site distant, d'autre part, peuvent bénéficier de la mise en oeuvre du procédé objet de la présente invention.

Selon des caractéristiques particulières, l'opération de détection de transaction et/ou l'opération de détection de début de visite n'est effectuée que pour certains sites distants prédéterminés. Grâce à ces dispositions, lesdits sites distants peuvent offrir à leurs visiteurs un niveau de sécurité accru par rapport aux autres sites distants.

D'autres avantages, buts et caractéristiques de la présente invention ressortiront de la description qui va suivre, faite dans un but explicatif et nullement limitatif en regard des dessins annexés dans lesquels :
- la figure1 représente un dispositif, en communication sur un réseau informatique, adapté à la mise en oeuvre d'au moins un mode de réalisation exemplaire de la présente invention ;
- la figure 2 représente un organigramme d'opérations effectuées dans un mode de réalisation exemplaire de la présente invention, par exemple en relation avec le mode de réalisation de dispositif illustré en figure 1,
- la figure 3 représente un organigramme d'opérations effectuées dans un mode de réalisation exemplaire de la présente invention, par exemple en relation avec le mode de réalisation de dispositif illustré en figure 1,
- la figure 4 représente un organigramme d'opérations effectuées dans un mode de réalisation exemplaire de la présente invention, par exemple en relation avec le mode de réalisation de dispositif illustré en figure 1,
- les figures 5A à 6B représentent des communications et des opérations mises en oeuvre dans deux modes de réalisation exemplaire de la présente invention, par exemple en relation avec le mode de réalisation de dispositif illustré en figure 1, et
- les figures 7A et 7B représentent sous forme de schéma relationnel et d'organigramme, un autre aspect de la présente invention.

Dans toute la description, les expressions " trace " , " enregistrement " , " contrat digital " ou " fichier de transaction " se réfèrent, indifféremment, à des informations représentatives d'une visite d'un site puis, en cas de détection de transaction ou de préparation de transaction, à leur conservation en mémoire non volatile. Dans toute la description, le mot " utilisateur " concerne une personne qui accède à un site et/ou y effectue une transaction ou une déclaration administrative.

Dans toute la description, les expressions " détection de transaction " et " détection de préparation de transaction " sont équivalents. Par exemple lorsqu'un utilisateur sélectionne un produit ou service et remplit un panier sur un site, il prépare une transaction qui peut ne pas avoir lieu ou être finalisée ultérieurement par paiement du produit ou service. Cependant, juridiquement, la préparation de la transaction comporte des engagements du site, en particulier la présentation du produit ou service qui motive la sélection par l'utilisateur et le logiciel d'assistance effectue donc la même procédure que si la transaction avait été finalisée. De même, lorsque l'utilisateur transmet à un site des " informations à protéger " , c'est-à-dire des informations confidentielles ou sensibles, cela implique des obligations de la part du site, ne serait-ce que pour le respect de la vie privée de l'utilisateur et une transaction a donc lieu par la simple transmission de l'information à protéger. Pour les mêmes raisons, l'expression " transaction " recouvre les déclarations administratives car elles comportent des engagements de la part du site de déclaration.

Dans toute la description, le mot " ordinateur " , lorsqu'il concerne un outil mis en oeuvre par l'utilisateur, est équivalent aux mots " terminal " et " terminal utilisateur " et ces expressions sont employées indifféremment.

Dans des exemples de réalisation de la présente invention, préférentiellement, le procédé est implémenté en tâche de fond pour ne pas perturber le fonctionnement auquel l'utilisateur est habitué, au moins jusqu'à ce qu'une transaction en ligne soit détectée. Selon des variantes exemplaires de ces aspects, le procédé n'interagit avec l'utilisateur que lorsqu'une transaction est effectuée (hormis l'affichage éventuel d'un icône dans une barre d'outil ou dans les fonctions d'un navigateur) et, lorsqu'une transaction est effectuée, une fenêtre de dialogue est ouverte au moment de la détection de la transaction et/ou au moment de la fin de la transaction. Selon des variantes exemplaires de ces aspects, même lorsqu'une transaction est détectée, le procédé n'interagit pas avec l'utilisateur.

Pour la présente invention, au moins une partie d'un logiciel qui le met en oeuvre réside préférentiellement dans le terminal de l'utilisateur ou dans un serveur d'un fournisseur d'accès au réseau concerné ou d'un portail d'accès à des fonctions de ce réseau.

La présente invention participe à la définition d'un procédé d'assistance à un utilisateur d'un réseau de communication. Dans la suite de la description, le terme logiciel d'assistance fait référence à des modes de réalisation exemplaires d'implémentation du procédé visé par la présente invention.

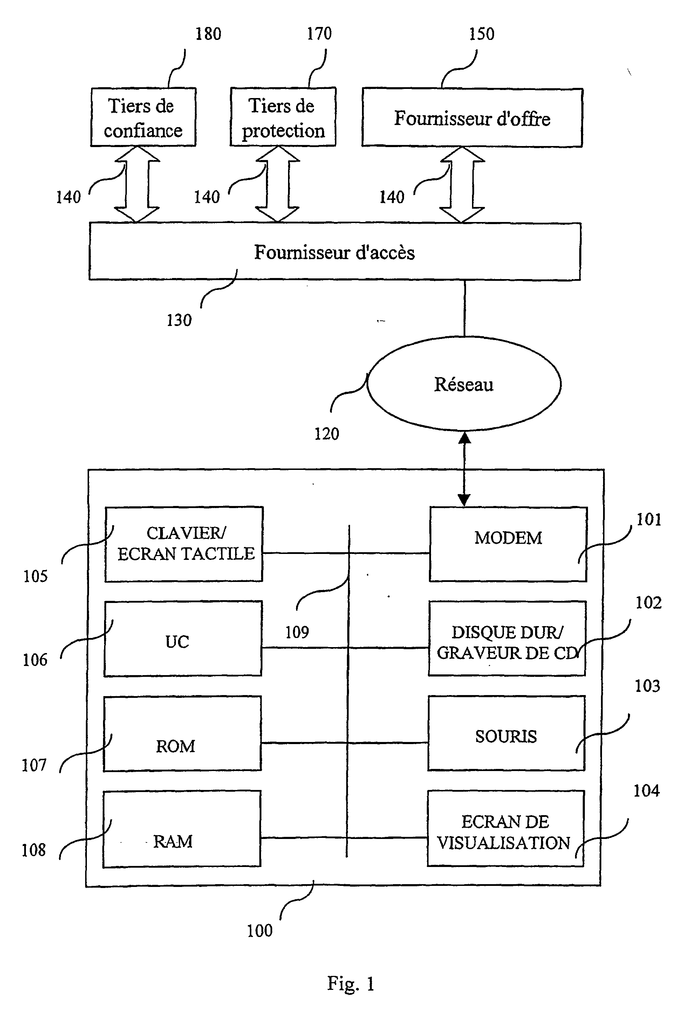

En figure1 sont représentés un terminal utilisateur informatique 100, connecté, par l'intermédiaire d'un réseau 120, d'un serveur d'un fournisseur d'accès 130 et d'un réseau 140, à un site informatique distant 150. Dans le premier mode de réalisation illustré en figure 1, le terminal 100 comporte, reliés entre eux par un bus d'adresses et de données 109, une interface de communication sur un réseau 101, une unité de sauvegarde non volatile 102, un dispositif de pointage 103, un écran de visualisation 104, un clavier (ou écran tactile) 105, une unité centrale 106, une mémoire centrale non volatile 107 et une mémoire vive 108.

Le réseau 120 est, par exemple, le réseau téléphonique commuté, un réseau câblé (transportant aussi, par exemple, des signaux de télévision) ou une ligne DSL. Le serveur du fournisseur d'accès 130 est, par exemple, le serveur du fournisseur d'accès au réseau Internet connu sous le nom d'AOL (marque déposée) ou de WANADOO (marque déposée). Le réseau 140 est, par exemple, le réseau de communication informatique connu sous le nom d'Internet. Le site informatique distant 150 est mis en oeuvre par un serveur informatique programmé à cet effet selon des techniques connues.

Dans le mode de réalisation exemplaire illustré en figure 1, le terminal 100 est un ordinateur personnel connu sous le nom de PC (acronyme de Personal Computer pour ordinateur personnel) ou un ordinateur de réseau, connu sous le nom de NC (acronyme de Network Computer pour ordinateur de réseau) ou un assistant personnel connu sous le nom de PDA. L'interface de communication sur un réseau 101 est, par exemple, un modulateur-démodulateur ou MODEM ou une carte réseau. L'unité de sauvegarde non volatile 102, est, par exemple, un disque dur, un lecteur/enregistreur de disques compacts ou des composants de mémoire non volatile utilisés en particulier dans les assistants personnels. Le dispositif de pointage 103, est, par exemple, une souris informatique ou intégré dans l'écran de visualisation 104 sous forme d'écran tactile. L'écran de visualisation 104 est, par exemple, un écran plat, un écran tactile ou un écran à tube cathodique.

Le clavier 105 est adapté à sélectionner des caractères alphanumériques, Il peut prendre la forme d'un écran tactile associé à un moyen de reconnaissance de caractères. L'unité centrale 106 est, par exemple un microprocesseur ou un microcontrôleur, par exemple des marques déposées Intel Pentium, ou compatible. La mémoire centrale non volatile 107 conserve les instructions de programme du processeur 106 qui lui permettent de démarrer lorsqu'il commence à être alimenté en électricité. La mémoire vive 108 est, par exemple, une mémoire cache adaptée à conserver des informations représentatives d'au moins une page reçue de la part d'un site tel que le site informatique distant 150.

Pour la mise en oeuvre d'exemples de réalisation de la présente invention, le terminal 100 est relié, par l'intermédiaire du réseau 140 à un site tiers d'assistance ou de protection 170 et à un site tiers de confiance 180. Le site tiers de protection 170 possède un serveur qui conserve des pages Internet et/ou une base de données qui peut être interrogée par le terminal 100. Le site tiers de confiance 180 possède un serveur sur lequel des enregistrements ou des certificats d'intégrité peuvent être mémorisés par le terminal 100. En variante, au moins l'un des sites 170 et 180 est confondu avec celui du fournisseur d'accès 130.

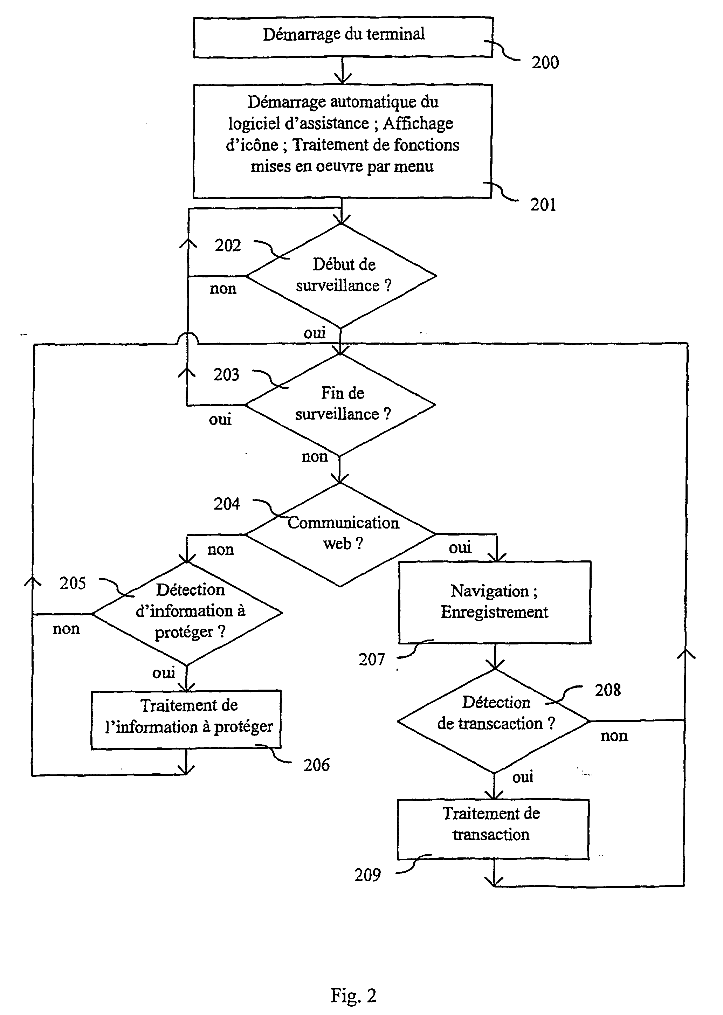

Selon des modes de réalisation exemplaires, le terminal 100, le fournisseur d'accès 130, le site tiers de protection 170, ou une combinaison de ces moyens agissant conjointement, est adapté à mettre en oeuvre l'un ou une combinaison des organigrammes illustrés aux figures 2 à 8 ou exposé ci-dessous en regard de la figure1 ou encore les caractéristiques décrites dans le préambule de la présente demande, préambule qui fait partie de la description de modes exemplaires de réalisation de l'invention mais, pour un souci de concision, n'est pas recopié ici. De plus, techniquement, l'utilisation de clés asymétriques permet au site de vérifier immédiatement l'identité du contractant ou du déclarant par utilisation d'une clé dite " publique " , généralement disponible en ligne.

Selon l'invention, le terminal 100, le fournisseur d'accès 130, le site tiers de protection 170, ou une combinaison de ces moyens agissant conjointement, est adapté à effectuer :
- une opération de détection de début de visite d'un site distant,
- une opération de détection d'une transaction comportant au moins l'une des opérations suivantes :
   - la mise en oeuvre d'une méthode d'authentification ou de signature électronique à clés asymétrique de l'utilisateur,
   - la détection d'au moins une séquence de symboles prédéterminée dans une page reçue de la part du site, et
   - la détermination qu'une adresse de page ou un nom de domaine du site distant correspond à au moins une adresse prédéterminée,
et, lorsqu'une transaction est détectée, une opération de mémorisation en mémoire non volatile, d'une trace de pages dudit site distant.

Dans des exemples de réalisation, le terminal 100, le fournisseur d'accès 130, le site tiers de protection 170, ou une combinaison de ces moyens agissant conjointement, est adapté à effectuer :
- une opération de détection de début de visite d'un site distant,
- une opération de détection d'une transaction comportant la mise en oeuvre d'une méthode d'authentification ou de signature électronique à clés asymétrique de l'utilisateur,
et, lorsqu'une transaction est détectée, une opération de mémorisation en mémoire non volatile, d'une trace de pages dudit site distant.

A chaque fois qu'il est fait référence dans la description à une authentification ou une signature servant à détecter une transaction, l'authentification ou la signature sont à clé asymétriques, par exemple conformes à l'infrastructure à clés publique PKI. La présente invention ne concerne pas les authentifications vis-à-vis d'un terminal de l'utilisateur qui ne mettraient pas en oeuvre de clés asymétriques, par exemple les authentifications par mesure biométrique, à carte à puce ou à code confidentiel. En effet, ces derniers types d'authentification ne sont pas conformes aux lois sur la signature électronique et n'engagent donc pas légalement un acheteur en ligne (elles se limitent généralement à accéder à une ressource, le terminal de l'utilisateur ou un compte client sur un site, et ne permettent pas d'effectuer une transaction).

Dans des exemples de réalisation, le terminal 100, le fournisseur d'accès 130, le site tiers de protection 170, ou une combinaison de ces moyens agissant conjointement, est adapté à effectuer :
- une opération de détection de début de visite d'un site distant,
- une opération de détection d'une transaction comportant la détection d'au moins une séquence de symboles prédéterminée dans une page reçue de la part du site,
et, lorsqu'une transaction est détectée, une opération de mémorisation en mémoire non volatile, d'une trace de pages dudit site distant.

La séquence de symboles détectée dans la page reçue de la part du site distant 150 peut se trouver, selon deux variantes qui répondent à des problèmes différents selon que le site utilise des noms de pages bien différenciés pour les différentes étapes d'une transaction, ou non, dans son adresse ou son nom de domaine ou dans son contenu, par exemple décrit dans l'un des langages de description HTML ou XML. Par exemple, le site nomatica.com utilise une seule adresse pour toutes ses pages, les étapes d'une transaction étant obtenues par mise en oeuvre de fonctions javascript et le traitement du contenu de chaque page de ce site pour y rechercher des mots clés (tels que " commande " , " panier " , " paiement " ) ou des mots référencés en regard du nom de domaine de ce site dans une base de données accessible au terminal 100, permet de détecter une transaction. Pour la mise en oeuvre de ce moyen de détection de transaction, l'homme du métier peut soit scruter les informations transitant sur un port de communication du terminal 100, ou en relation avec le logiciel de navigation, soit utiliser une routine de lecture de la description de la page et rechercher les mot clés dans cette description.

En revanche un site comme " amazon.com " utilise des noms de page différents pour toutes les pages différentes du site et la lecture de l'adresse des pages permets de détecter la préparation d'une transaction (par exemple, les mots " checkout " , " cart " et " one-click " correspondent à différentes étapes d'une transaction et du paiement d'un produit ou service vendu sur ce site). Le référencement dans une base de données accessible au terminal 100, de ces mots ou de parties plus importantes des adresses des pages du site amazon.com, en regard du nom de domaine " amazon.com " permet alors de détecter une transaction ou une préparation de transaction.

Dans des exemples de réalisation, le terminal 100, le fournisseur d'accès 130, le site tiers de protection 170, ou une combinaison de ces moyens agissant conjointement, est adapté à effectuer :
- une opération de détection de début de visite d'un site distant,
- une opération de détection d'une transaction comportant la détermination qu'une adresse de page ou un nom de domaine du site distant correspond à au moins une adresse prédéterminée,
et, lorsqu'une transaction est détectée, une opération de mémorisation en mémoire non volatile, d'une trace de pages dudit site distant.

Dans des exemples de réalisation, la visite d'un site distant est détectée et, lorsqu'une transaction est détectée, la conservation de la trace de pages visitées sur ledit site permet ultérieurement à l'utilisateur de se référer à cette trace en cas de problème relatif à ladite transaction.

Pour constituer ladite trace, dans des exemples de réalisation, à partir de l'opération de détection de début de visite, une opération de constitution de ladite trace est effectuée et lorsque ladite opération de mémorisation en mémoire non volatile n'a pas lieu, la trace constituée est automatiquement effacée. Par exemple, ladite trace est conservée pendant la durée de visite d'un ou deux sites supplémentaires, puis est effacée. Selon un autre exemple, ladite trace est conservée pendant une durée prédéterminée ou en fonction de l'espace mémoire disponible pour d'autres traces, plus récentes ou relatives à des transactions.

Par exemple, une base de données accessible au terminal 100 indique des relations entre des sites, en particulier lorsqu'une expérience d'achat peut se poursuivre depuis l'un des sites, où le consommateur choisit un bien ou un service dont il veut bénéficier, vers un autre de site, où il s'identifie et/ou paye. Dans ce cas, la trace de la transaction peut représenter plus d'un site et l'opération de mémorisation en mémoire non volatile peut concerner une trace qui s'étende sur plus d'un site. Par exemple, ladite trace est conservée jusqu'à ce qu'une quantité de mémoire non volatile allouée à la mise en oeuvre du procédé de la présente invention soit atteinte, ou qu'une quantité disponible pour la mise en oeuvre du procédé de la présente invention soit atteinte, et lorsqu'une transaction est détectée sur un site en cours de visite, les traces qui concernent ce site et qui sont conservées en mémoire non volatile sont proposées à l'utilisateur comme des compléments à la trace concernant le site en cours de visite. Ainsi, pour des sites sur lesquels une transaction peut être effectuée en plusieurs visites (utilisation d'un panier, par exemple), différents traces relatives à des visites concernant ladite transaction peuvent, avec l'accord de l'utilisateur, être rattachés.

Dans des exemples de réalisation, le procédé comporte une opération de détection de fin de transaction, par détection de la sortie du site visité et de sites liés audit site visité dans une base de données accessible au terminal 100. Les sites liés peuvent être, par exemple, des sites de paiement ou sites auxquels on accède par un lien sur ledit site visité, ces sites ou certaines pages de ces sites étant, par exemple, repérés dans la base de données en correspondance avec ledit site visité.

Dans des exemples de réalisation, la détermination qu'une adresse de page du site distant correspond à au moins une adresse prédéterminée comporte la détection qu'une racine d'adresse correspond à un mode de communication encrypté. Par exemple, la racine peut être " https " pour l'encryption connue sous le nom de " SSL " , pour " Secure Socket Layer " ou " couche de sécurisation ".

Dans des exemples de réalisation, la détermination qu'une adresse de page du site distant correspond à au moins une adresse prédéterminée comporte la détection que ladite adresse correspond à une adresse conservée dans une base de données. Par exemple, une partie de ladite adresse comporte la chaîne de symboles " cart " sur le site cdnow.com ou la chaîne de symboles " one-click " sur le site amazon.com. La base de données, qui peut être, par exemple, conservée par le terminal 100, le site tiers de protection 170, ou le site visité, conserve, en relation avec un identificateur du site, ces chaînes de symboles caractéristiques de la préparation d'une transaction.

Dans des exemples de réalisation, la détermination qu'une adresse de page ou un nom de domaine du site distant correspond à au mois une adresse prédéterminée comporte la détermination de ce que le site distant est répertorié dans une base de données accessible au terminal 100 et :
- si le site distant est répertorié dans la base de données, la détermination de ce qu'une adresse de page ou un nom de domaine visitée correspond à au moins une adresse de page ou un nom de domaine conservé dans ladite base de données en relation avec un identifiant dudit site distant, et
- si le site distant n'est pas répertorié dans la base de données, la détermination de la mise en oeuvre d'un mode de communication encrypté et/ou de la visite d'une page d'un autre site que ledit site distant correspond à un site de transaction prédéterminé.

Pour la mise en oeuvre de certains de ces exemple de réalisation, la base de données reçoit du terminal 100 une requête identifiant le site distant 150, par exemple par son nom de domaine, et retourne des données différentes selon que le site 150 est répertorié dans cette base de données, ou non.

Lorsque le site distant 150 est répertorié dans cette base de données, celle-ci retourne des adresses ou des noms de domaines indicatifs d'une transaction, par exemple au moins une adresse de page à laquelle l'utilisateur accède lorsqu'il sélectionne un produit ou service et/ou qu'il remplit un panier ( " cart " ou " shopping cart " en anglais), au moins une adresse de page ou un nom de domaine d'un site de paiement, éventuellement indépendant du site 150 mais sur lequel l'utilisateur peut effectuer le paiement d'un produit ou service commandé sur le site 150. Cette partie de la base de données peut être remplie par inspection manuelle et visuelle ou par un robot programmé pour repérer des pages contenant des mots clés sur des sites pour lesquels de nombreuses requêtes sont transmises par des terminaux 100 mettant en oeuvre le logiciel d'assistance. Lorsque le site distant n'est pas répertorié, des données représentatives d'au moins une page de site de conclusion de transaction (par signature ou authentification à clés asymétriques ou par paiement) indépendant du site 150. Ces données peuvent, par exemple, comporter les noms de domaine ou les adresses de page de tous les sites de paiement de la base de données qui ne sont pas des sites répertoriés et qui correspondent au même pays ou à la même région (déterminée par appel des serveurs DNS) que le site distant 150 objet de la requête. Par exemple, une transaction sur le site nomatica.com, répertorié dans la base de données permet de payer avec une carte bancaire sur le site sogenal.fr et ce nom de domaine, sogenal.fr, est transmis par la base de données, avec d'autres noms de domaine ou adresses de page du même type, en réponse aux requêtes concernant des sites distants français ou européens non répertoriés dans la base de données.

On observe que, pour les sites répertoriés, la réponse à la requête de la part d'un terminal 100 peut comporter, des adresses ou des noms de domaine de sites sur lesquels une transaction entamée sur le site distant 150 peut se poursuivre. Par exemple, une transaction commencée sur le site nomatica.com peut se poursuivre sur le site nomatica.fr et, comme indiqué plus haut, sur le site sogenal.fr. Le logiciel d'assistance traite alors le passage d'un site distant 150 à un site sur lequel peut se poursuivre une transaction, comme si ces sites ne formaient qu'un seul site distant 150.

Dans des exemples de réalisation, l'opération de détection de début de visite comporte une opération de détermination d'une adresse de page visitée et au moins l'une des opérations suivantes
- une opération de détermination que cette adresse correspond à une page d'un site différent du site précédemment visité ; et
- une opération de comparaison de ladite adresse avec des adresses conservées dans une base de données (pour ne pas prendre pour un début de transaction, le passage sur un site associé au site distant 150 ; comme indiqué ci-dessus).

Ainsi, lorsqu'un utilisateur accède à un nouveau site qu'il n'était pas déjà en train de visiter, la détection de début de visite du nouveau site est déterminée par traitement de l'adresse de la page accédée. Ainsi, il n'est pas nécessaire que le site émette une information spécifique pour que le début de visite soit détecté.

Dans des exemples de réalisation, au cours de l'opération de mémorisation en mémoire non volatile, la trace de pages visitées est représentative de toutes les pages du site distant qui ont été visitées depuis l'opération de détection de début de visite. Ainsi, la trace mémorisée concerne toutes les pages visitées, et non seulement certaines pages, de telle manière que la trace permet de déterminer toutes les pages auxquelles l'utilisateur a accédé avant de consentir à contracter.

Dans des exemples de réalisation, lorsque aucune transaction n'est détectée, aucune trace de pages du site n'est mise en mémoire non volatile. Dans des exemples de réalisation, lorsque aucune transaction n'est détectée, une trace de page de site est conservée en mémoire non volatile et automatiquement éliminée en fonction de l'espace mémoire de la mémoire non volatile qui est disponible et/ou allouée à la mise en oeuvre du procédé de l'invention.

Dans des exemples de réalisation, au cours de l'opération de mémorisation en mémoire non volatile, la trace de pages visitées est représentative de toutes les pages du site distant qui ont été visitées depuis l'opération de détection de début de visite. Ainsi, la trace mémorisée concerne toutes les pages visitées et non seulement certaines pages de telle manière que sa représentativité de la transaction est élevée. Dans des exemples de réalisation, l'utilisateur décide de la conservation ou non de traces de toutes visites sur au moins un site prédéterminé et, lorsque aucune transaction n'est détectée, l'opération de mémorisation en mémoire non volatile n'est effectuée que si, pour ledit site distant, l'utilisateur a choisi qu'une trace soit mémorisée, au cours de ladite opération de sélection. L'opération de sélection peut se faire selon des techniques d'interfaçage connues, par exemple, par affichage d'une fenêtre de dialogue proposant différentes options. Grâce à chacune de ces dispositions, aucune mémoire n'est encombrée par des traces de visites que l'utilisateur considère comme inutiles, par exemple des accès à des bases de données utilisant un mode communication encrypté sans qu'une transaction n'ait effectivement lieu, tout en autorisant un utilisateur à conserver plusieurs traces successives concernant des sites où il passe des ordres boursiers, par exemple, de telle manière que si aucune confirmation d'ordre ne parvient pas à l'utilisateur, il en conserve néanmoins une trace.

Dans des exemples de réalisation, le procédé comporte, lorsqu'une transaction est détectée, une opération de mise à disposition de l'utilisateur d'information contextuelle dépendant dudit site distant. Cette information contextuelle peut est relative au pays du site, aux lois applicables à un achat sur ledit site, aux qualités du site, à des conseils spécifiques au type de site (enchère, pour enfants,...) et/ou à des services qui peuvent améliorer l'expérience d'achat sur ledit site, par exemple. Par exemple, une base de données, conservée dans le terminal 100 ou à distance, reçoit, de la part d'un terminal utilisé par l'utilisateur, une information représentative du contexte et retourne l'information contextuelle à mettre à disposition de l'utilisateur, selon des techniques connues d'interrogation de bases de données.

Dans des exemples de réalisation, lorsque aucune transaction n'est détectée, au moins une partie de ladite information contextuelle n'est pas rendue accessible à l'utilisateur. Ceci permet, en particulier, d'économiser de la bande passante entre le lieu de conservation de l'information contextuelle, par exemple un serveur de réseau, et le terminal 100.

Dans des exemples de réalisation, lorsqu'une opération de mémorisation en mémoire non volatile d'une trace de pages visitées sur ledit site est effectuée, une trace d'au moins une page prédéterminée dudit site est effectuée, même si ladite page prédéterminée n'a pas été visitée. Par exemple, une base de données conserve des adresses de pages à contenu légal dudit site et lorsqu'une opération de mémorisation en mémoire non volatile est effectuée, par exemple, lorsqu'une transaction est détectée, la base de données est interrogée par le terminal 100 et les pages qui possèdent les adresses en question sont appelées par l'intermédiaire d'une interface de navigateur et automatiquement associées à ladite trace conservée en mémoire non volatile.

Grâce à chacune de ces dispositions, lorsqu'une transaction est détectée, l'utilisateur dispose d'information complémentaire, soit au cours de la transaction, soit dans la trace conservée.

Dans des exemples de réalisation, lorsqu'une signature électronique à clés asymétriques est mise en oeuvre, au cours d'une opération d'édition, des pages ou des portions de pages dudit site distant 150 sont, après interrogation de l'utilisateur ou automatiquement, associées au document signé. A cet effet, par exemple, un logiciel qui met en oeuvre la signature électronique, par exemple un pilote de lecteur de carte à mémoire, appelle un logiciel qui met en oeuvre le procédé de la présente invention. Dans des exemples de réalisation, au cours d'une opération de communication avec ledit site distant, une information représentative desdites pages ou portions de pages incorporées est transmise audit site distant. Un protocole de communication avec le site peut être mis en oeuvre à cet effet.

Grâce à ces dispositions, l'utilisateur peut incorporer dans un contrat signé, les éléments sur lesquels l'utilisateur a fondé sa décision de signer, par exemple une image d'un objet qu'il achète, des conditions générales de ventes, des spécifications d'un produit ou d'une prestation.

Dans des exemples de réalisation, au cours de ladite opération de mémorisation en mémoire non volatile, une trace de pages d'un site précédemment visité est aussi mémorisée. Par exemple, la trace du site dont la visite précède immédiatement celle du site sur lequel l'utilisateur se trouve est conservée et mémorisée en fonction de critères prédéterminés. Par exemple, dans une base de données, l'un des sites est mis en correspondance avec l'autre. Ainsi, si le site visité sur lequel une détection de transaction est effectuée correspond à un organisme de paiement, ou de signature, une trace du site depuis lequel l'utilisateur a atteint ce site sur lequel une détection de transaction est effectuée. A cet effet, une base de données conservée par le terminal 100 ou à distance, peut être interrogée selon des techniques connues. Selon un autre exemple, une trace de chaque visite est conservée en mémoire non volatile et lorsqu'une mémorisation en mémoire non volatile est effectuée et qu'une transaction est détectée, la trace de la visite en cours et la trace de la précédente visite du même site sont associées comme traces de la transaction. Ainsi, lorsqu'une transaction s'effectue au cours de plusieurs visites, les traces de deux ou plusieurs visites relatent les différentes étapes de la transaction.

Dans des exemples de réalisation, au cours de l'opération de mémorisation en mémoire non volatile, ladite trace de pages visitées comporte une information de quelles parties de pages ont été affichées. Par exemple, la compression de l'image affichée, effectuée à intervalles de temps réguliers et/ou lorsqu'un dispositif de pointage tel qu'une souris ou de saisie de caractères au clavier, permet de mettre en oeuvre de tels exemples de réalisation.

Dans des exemples de réalisation, au cours de l'opération de mémorisation en mémoire non volatile, ladite trace de pages visitées ne représente que des parties de pages qui ont été affichées.

Par exemple, la compression de l'image affichée, effectuée à intervalles de temps réguliers et/ou lorsqu'un dispositif de pointage tel qu'une souris ou de saisie de caractères au clavier, permet de mettre en oeuvre de tels exemples de réalisation.

Grâce à chacune de ces dispositions, ladite trace mise en mémoire atteste des informations sur lesquelles l'utilisateur a donné son consentement d'effectuer une transaction.

Selon des caractéristiques particulière, ladite opération de mémorisation en mémoire non volatile comporte une opération de compression d'images affichées sur un écran accessible à un utilisateur indépendant dudit site distant.

Dans des exemples de réalisation, ladite compression d'image comporte une opération de limitation d'un nombre de couleurs rendues et une opération de compression sans perte de l'image résultant de l'opération de limitation de nombre de couleurs rendues. Par exemple, le nombre de couleurs qui peuvent affectés à chaque point de l'image est d'abord réduit de telle manière que la description de la couleur de chaque point utilise moins de huit bits. Grâce à chacune de ces opérations, la trace mémorisée est de dimension réduite.

Dans des exemples de réalisation, toutes les opérations dudit procédé sont effectuées sur le terminal utilisateur 100, à l'exception éventuelle des opérations relatives à une base de données qui peut aussi bien être conservée dans le terminal 100 qu'à distance de ce terminal 100 mais accessible par le terminal 100.

Grâce à ces dispositions, la mise en oeuvre dudit procédé est aisée car indépendante des sites distants. En outre, l'utilisateur conserve ainsi la maîtrise de la mise en oeuvre dudit procédé.

Dans des exemples de réalisation, l'opération de mémorisation en mémoire non volatile comporte une opération de transmission de ladite trace à une mémoire distante. Par exemple, ladite trace peut être attachée à un e-mail ou conservées sur un espace mémoire sur le réseau mis à disposition de l'utilisateur (voir les offres des sociétés " freedrive " ou " xdrive ") Grâce à ces dispositions, ladite trace peut être conservée par l'utilisateur en un lieu de son choix.

Dans des exemples de réalisation, le procédé tel que succinctement exposé ci-dessus comporte une opération de transmission au site distant d'un signal prédéterminé représentatif de la mise en oeuvre dudit procédé. A cet effet, un protocole de communication peut être mis en place entre le site distant 150 et le terminal 100. Grâce à ces dispositions, l'utilisateur, d'une part, et le site distant 150, d'autre part, peuvent bénéficier de la mise en oeuvre du procédé objet de la présente invention et disposés de la même trace de la transaction.

Dans des exemples de réalisation, le procédé tel que succinctement exposé ci-dessus comporte une opération de réception d'information représentative de pages, par exemple des adresses de pages à contenu légal, en provenance dudit site distant et, au cours de l'opération de mémorisation en mémoire non volatile, une trace du contenu des pages est mise en mémoire, par exemple après utilisation d'un navigateur pour obtenir lesdites pages sans les afficher. On observe que l'information représentative peut comporter au moins une adresse de page dudit site distant et/ou un contenu de ladite page, par exemple.

Dans des exemples de réalisation, le logiciel d'assistance met en oeuvre une opération de transmission à distance au site tiers de protection 170 d'une information représentative de la détection de transaction. Par exemple, une base de données distante du terminal 100 peut être interrogée que dans le cas où une transaction a lieu. Par exemple, une base de données conservée par le terminal 100 peut être mise à jour uniquement lorsqu'une transaction est détectée.

Dans des exemples de réalisation, ladite opération de mémorisation de trace en mémoire non volatile comporte une opération de réception d'une information en provenance du site tiers de protection 170 qui est indépendant dudit site distant.

Grâce à chacune de ces dispositions, ladite trace peut être authentifiée. On observe qu'une information transmise au site tiers de protection 170 ou reçue du site tiers de protection 170 peut comporter au moins l'un de : un numéro de transaction, un numéro de licence de logiciel, une date, une heure, une ou des adresses de pages à contenu légal du site visité, une information représentative dudit site distant, un certificat d'intégrité, par exemple une fonction connue sous le nom de " hash " (pour " condensât " ), ou une fonction connue sous le nom de " checksum " (pour somme de vérification) ou une fonction connue sous le nom de " CRC " (pour code de redondance ou de correction), correspondant chacun à au moins une partie de la trace mémorisée.

Dans des exemples de réalisation, le procédé tel que succinctement exposé ci-dessus comporte une opération de sélection, par un utilisateur, d'une opération de transmission d'une information représentative de ladite trace ou de ladite trace, à distance et, en cas de sélection par l'utilisateur, la réalisation de ladite opération de transmission. Dans des exemples de réalisation, ladite opération de transmission comporte une opération de transmission d'un logiciel de décompression de fichier.

Dans des exemples de réalisation, le procédé tel que succinctement exposé ci-dessus comporte une opération de détermination d'une fenêtre active correspondant à un logiciel de navigation. Préférentiellement, la trace mémorisée en mémoire non volatile n'est pas représentative d'activités effectuées lorsque aucune fenêtre active ne correspond à un logiciel de navigation. Grâce à ces dispositions, lorsqu'un utilisateur conserve en tâche de fond, de manière inactive, une fenêtre d'un logiciel de navigation, la trace n'est pas représentative des autres activités effectuée par ledit utilisateur, par exemple si la trace est réalisée par compression d'image.

Dans des exemples de réalisation, le procédé tel que succinctement exposé ci-dessus comporte une opération de téléchargement ou de mise à jour au moins partielle d'une base de données. Dans des exemples de réalisation, ladite base de données comporte des adresses mises en oeuvre dans ladite opération de détection de transaction. Dans des exemples de réalisation, ladite base de données comporte des noms de domaine. Dans des exemples de réalisation, ladite mise à jour est effectuée à chaque fois qu'une transaction est détectée. Dans des exemples de réalisation, une mise à jour partielle de la base de données est effectuée à chaque fois qu'un début de visite est effectué. Dans des exemples de réalisation, ladite mise à jour est arrêtée après une durée prédéterminée. Grâce à ces dispositions, au moins une des opérations mises en oeuvre par ledit procédé est effectuée en relation avec ladite base de données.

Dans des exemples de réalisation, ledit procédé comporte une opération de téléchargement d'un logiciel adapté à mettre en oeuvre les autres opérations dudit procédé et une opération d'installation dudit logiciel au cours de laquelle une trace est transmise à distance pour déterminer le bon fonctionnement dudit logiciel. Par exemple, au cours de l'installation, une page prédéterminée est automatiquement visitée et une détection de transaction est simulée puis une autre page d'un autre site est automatiquement visitée et la trace résultant de la transaction est transmise. Grâce à ces dispositions, le bon fonctionnement dudit logiciel est déterminé automatiquement. Par exemple, l'absence de détection d'un début de transaction ou l'absence de détection de sortie de site sur lequel a lieu une transaction peut être détectée.

Dans des exemples de réalisation, l'opération de détection de transaction et/ou l'opération de détection de début de visite n'est effectuée que pour certains sites distants prédéterminés, par exemple indiqués par une base de données. Grâce à ces dispositions, lesdits sites distants peuvent offrir à leurs visiteurs un niveau de sécurité accru.

Dans des exemples de réalisation, ladite trace est encryptée. Grâce à ces dispositions, la confidentialité des informations contenues ou représentées par ladite trace est assurée.

Dans des exemples de réalisation, au cours de l'opération de détection de transaction, à chaque trace de transaction est associée et mémorisée en mémoire non volatile un moyen de paiement et un montant de paiement, par exemple en affichant une interface utilisateur et/ou en surveillant des chaînes de symboles ou de chiffres correspondant à un moyen de paiement. Et, au cours une opération de récapitulation de dépenses, une somme de dépenses effectuées avec un moyen de paiement ou avec tous les moyens de paiement utilisés, est déterminée. Dans des exemples de réalisation, au cours de ladite opération de récapitulation, sont mises en oeuvre une date de début et une date de fin de récapitulation et la somme ne concerne que les transactions effectuées entre ces deux dates.

Dans des exemples de réalisation, le procédé tel que succinctement exposé ci-dessus comporte une opération de détermination d'espace mémoire disponible pour de nouvelles traces. Par exemple, un espace mémoire est alloué par l'utilisateur au cours de l'installation du logiciel et la disponibilité de cet espace mémoire est surveillé, lorsqu'il se remplit, progressivement de traces de transaction et/ou d'autres traces. Dans des exemples de réalisation, lorsque ledit espace mémoire est inférieur à une quantité de mémoire prédéterminée, une opération d'affichage d'information relative à la gestion de ladite mémoire ou une opération d'effacement d'au moins la trace de transaction la plus ancienne ou une opération d'effacement d'au moins une trace correspondant à une transaction ne comportant pas d'obligation à long terme la plus ancienne, par exemple, une transaction de fourniture d'information.

Dans des exemples de réalisation, le logiciel d'assistance effectue :
- une opération de détection de début de visite d'un site distant,
- une opération d'authentification ou de signature électronique à clés asymétrique de l'utilisateur,
- une opération d'édition au cours de laquelle au moins une portions de page dudit site distant est sélectionnée par le signataire et incorporée au document signé, et
- une opération de mémorisation en mémoire non volatile, d'une trace de pages signées dudit site distant.

Au cours de l'opération d'édition, l'utilisateur sélectionne des pages du site distant 150, par exemple par utilisation d'un menu du logiciel d'assistance et au moins une partie du contenu de ces pages (par exemple leur contenu textuel, l'ensemble de leur contenu à l'exception du contenu provenant de liens, ou l'ensemble de leur contenu) est associé au document à signer, par exemple par édition et/ou modification de la description, par exemple en langage HTML ou XML, de la page contenant le document à signer. C'est alors le document modifié, comportant chaque partie de contenu sélectionné par l'utilisateur, qui est signé et conservé.

Selon une variante objet d'un autre aspect de la présente invention, au lieu ou en complément de la sélection de page du site distant, le signataire édite et ajoute des commentaires au document signé, par exemple par édition de sa description en langage HTML ou XML. Le signataire peut ainsi ajouter des mentions légales comme " sous réserve de livraison dans les 10 jours " .

Dans chaque mode de réalisation, la présence de l'enregistrement, ou trace, permet à l'utilisateur d'avoir, au moins, une protection juridique car une trace de l'accord contractuel existe, et une protection financière car le paiement est limité au montant convenu.

Les différents exemples de réalisation de la présente invention et les différentes caractéristiques particulières de ces exemples de réalisation peuvent être combinés pour la mise en oeuvre d'un procédé et d'un dispositif de sauvegarde d'information de transaction conforme à la présente invention.

On observe que l'information fournie par le site de protection 170 au terminal 100 peut dépendre des lieux géographiques où se trouvent d'une part le site 150 et d'autre part le terminal 100.

Par exemple, l'information peut représenter des sites de paiement (généralement bancaires) du pays ou de la région du site distant 150.

Par exemple, les lois applicables à une transaction peuvent dépendre de ces deux informations géographiques.

En fonction de la localisation géographique du terminal 100, que son utilisateur peut fournir au moment de l'acquisition ou de l'installation du logiciel d'assistance, l'offre ou la publicité d'un commerçant local à proximité du terminal 100 peut être fournie au terminal 100.

On observe que l'information confidentielle ou " à protéger " , peut comporter toute authentification ou signature électronique à clés asymétriques, le logiciel d'assistance détectant alors l'utilisation d'une routine ou d'un logiciel d'authentification ou de signature résidant sur le terminal 100, ou d'une forme d'information reçue de la part du réseau 120 et représentative d'une mise en oeuvre d'une authentification ou d'une signature à clés asymétriques ou d'une forme particulière de séquences de symboles d'un certificat d'authentification ou de signature électronique à clés asymétriques, d'une racine d'une authentification ou d'une signature électronique à clés asymétriques ou d'un accès à une fonction d'authentification ou de signature électronique à clés asymétriques. Ainsi, l'utilisation d'une quelconque forme d'authentification ou de signature électronique à clés asymétriques est un forme de détection de transaction.

Dans des exemples de réalisation, l'utilisation d'une authentification ou d'une signature électronique à clés asymétriques provoque la génération d'un moyen de paiement à usage unique, comme, par exemple, un numéro de carte bancaire, dans le terminal 100 ou dans un moyen informatique distant de ce terminal mais relié à lui par un réseau de télécommunication, et ce moyen de paiement à usage unique est utilisé pour la transaction. Dans un mode particulier de réalisation, la trace de la transaction mise en mémoire non volatile peut être limitée à la trace du document auquel est liée le certificat d'authentification ou la signature électronique à clés asymétriques. Dans un mode particulier de réalisation, la trace mémorisée en mémoire non volatile est au moins une adresse d'au moins une page reçue par le terminal 100 en provenance du site marchand (cette page étant éventuellement non affichée sur l'écran 104 du terminal 100). Dans un mode particulier de réalisation, la trace mémorisée en mémoire non volatile est au moins l'un des fichiers d'au moins une page reçue par le terminal 100 en provenance du site marchand (cette page étant éventuellement non affichée sur l'écran 104 du terminal 100). Dans un mode particulier de réalisation, la trace mémorisée en mémoire non volatile est au moins une partie affichée sur l'écran 104 du terminal 100 d'au moins une page reçue par le terminal 100 en provenance du site marchand. Pour la mise en oeuvre de ces différents modes de réalisation, l'homme du métier pourra se référer au reste de la présente description ou aux demandes de brevet FR 9911250, FR 9912108 et FR 9913401 et PCTIB/01 312.

Préférentiellement, la trace ou enregistrement mémorisé identifie ce qui a été affiché sur l'écran 104 et, éventuellement, la durée de l'affichage.

En variante, le paiement est sécurisé en remplaçant le numéro de carte de paiement par un numéro de chèque ou d'un numéro de carte de paiement à usage unique que le site fournisseur 150 peut faire tirer sur le compte de l'utilisateur ou du tiers de protection 170 ou d'un tiers assurant le paiement. Préférentiellement, selon cette variante, le site tiers de protection 170 demande une confirmation, une authentification ou une signature à clés asymétriques de l'utilisateur, émet à destination du site 150, une confirmation de l'ordre de paiement par ledit chèque en précisant le numéro de chèque, le nom du fournisseur et le montant du chèque. Le paiement n'est alors effectué que lorsque la livraison du produit ou service vendu a été faite, le cas échéant. Cette variante possède l'avantage de mettre l'argent sous séquestre jusqu'à la livraison, de garantir le fournisseur qu'il sera payé et d'éviter qu'un numéro de carte de paiement ne circule sur un réseau tel qu'Internet.

On observe que, dans ce cas, il n'est pas indispensable que le site tiers de protection 170 ne fournisse une racine pour le numéro de chèque.

On observe que le terme " à usage unique " recouvre le cas où des numéros sont pris dans un ensemble de numéros disponibles, qui sont affectés aléatoirement ou selon des règles prédéterminées à des transactions, de telle manière que le risque que le même utilisateur utilise deux fois de suite le même numéro " à usage unique " est inférieur à un millième. Le terme " à usage unique " recouvre aussi le cas des numéros qui sont provisoirement mis en correspondance avec un moyen de paiement de l'utilisateur, par exemple dans une table de correspondance conservée par un réseau bancaire.

Dans le mode de réalisation illustré en figure 2, à la suite d'une opération 200 de démarrage du terminal 100 et automatiquement par le fait même au démarrage du terminal 100, au cours de l'opération 201, le logiciel d'assistance est automatiquement mis en fonctionnement et provoque l'affichage par l'écran de visualisation 104, dans une barre d'outils, d'un icône spécifique audit logiciel d'assistance. En cliquant sur cet icône, grâce à un dispositif de pointage tel que la souris 103, l'utilisateur fait apparaître un menu qui comporte les options:
- enregistrer la partie visible de la page affichée,
- enregistrer la page affichée,
- commencer un enregistrement,
- éditer les enregistrements déjà effectués,
- aller sur le site d'assistance à la transaction,
- préférences/paramétrage,
- visualiser les informations concernant un site,
- suspendre l'exécution du logiciel d'assistance, et
- quitter le logiciel d'assistance.

L'option " enregistrer la partie visible de la page affichée " provoque la mise en mémoire de ce qui apparaît sur l'écran de visualisation 104, conjointement à une date et une heure, et un certificat d'intégrité de ce qui est mis en mémoire, certificat d'intégrité qui permet de détecter toute modification ultérieure de ce qui est mis en mémoire (par exemple un condensât ou " hash " , une somme de vérification ou " checksum " ou un CRC ou code de redondance).

L'option " enregistrer la page affichée " provoque la mise en mémoire de l'ensemble de la page dont une partie apparaît sur l'écran de visualisation 104, conjointement à une date et une heure, et un certificat d'intégrité.

L'option " commencer un enregistrement " provoque la mise en mémoire de tout ce qui apparaît sur l'écran de visualisation 104, à partir de la sélection de cette option jusqu'à la sélection d'une option " arrêter l'enregistrement " (cette dernière option apparaît automatiquement à la place de l'option " commencer un enregistrement " lorsque cette dernière est sélectionnée) conjointement à une date et une heure, et un certificat d'intégrité.

L'option " éditer les enregistrements déjà effectués " permet de voir une liste d'enregistrements mis en mémoire. par exemple, chaque ligne d'un tableau correspond à l'un de ces enregistrements mis en mémoire et de gauche à droite :
- un symbole indique si cet enregistrement concerne une information confidentielle (par exemple, le symbole " C " ), si cet enregistrement concerne une transaction financière (par exemple, le symbole " $ " ), si cet enregistrement concerne une information confidentielle critique (par exemple, le symbole " X " ) ;
- un numéro de certificat d'intégrité, au moins pour les transactions financières,
- une date et une heure au cours de l'enregistrement, par exemple le début ou la fin de l'enregistrement,
- la durée de l'enregistrement,
- une date à laquelle une action doit être exécutée on constatée (en particulier une livraison liée à une transaction financière) et à laquelle l'utilisateur sera interrogé sur le bon déroutement de cette action et/ou sur sa satisfaction concernant le fournisseur de cette action, un message, par exemple un e-mail, représentant au moins une réponse de l'utilisateur, étant alors transmis à destination du site distant ou d'un site tiers, par exemple, le site tiers de protection 170, afin, le cas échéant d'effectuer un traitement de ladite réponse de l'utilisateur, par exemple sous la forme d'une réclamation adressée au site, à une assurance protection juridique ou au site 170,
- le nom du site distant 150 dont des pages ou des parties de pages sont enregistrées, le cas échéant,
- la présence ou non d'informations jointes, telles que des pages HTML de termes et conditions, et
- la taille du fichier contenant l'enregistrement en question.

Chacun des enregistrements peut être sélectionné par usage de la souris 103. Le tableau des enregistrements est affiché avec des boutons qui peuvent être sélectionnés par usage de la souris 103 et qui concernent, respectivement :
- un lancement de la visualisation de l'enregistrement concerné par une ligne sélectionnée préliminairement (par défaut, la première), cette visualisation se fait avec un petite interface graphique représentant les boutons d'un magnétoscope (lire, arrêt, et, éventuellement, retour) et/ou une échelle avec un curseur qui peut être déplacé pour visualiser les images dans la séquence, la position du curseur représentant, par rapport à l'échelle, la proportion de temps écoulé entre le début de la séquence et l'image visualisée par rapport à la durée totale de la séquence,
- de visualiser les informations jointes à l'enregistrement,
- d'adjoindre ou de modifier des commentaires relatifs à cet enregistrement,
- d'effacer un enregistrement, et
- d'exporter un enregistrement vers un autre répertoire de la mémoire 108 ou d'une autre mémoire.

L'usage de chacune de ces fonctions est conditionné à une authentification de l'utilisateur (demande de mot de passe ou toute autre signature).

L'option " aller sur le site d'assistance à la transaction " connecte le terminal 100 et le site tiers de protection 170 pour que l'utilisateur du terminal 100 puisse visualiser des pages du site 170.

L'option " préférences/paramétrage " permet de choisir les paramètres de fonctionnement du logiciel d'assistance (opération appelée par la suite paramétrage du logiciel d'assistance), et, en particulier les paramètres suivants :
- un mot de passe pour contrôler le logiciel d'assistance (si aucun mot de passe n'est choisi, tous les contrôles sont toujours accessibles à tout utilisateur),
- des informations à protéger dites " financières " comportant, par exemple, une ou plusieurs des informations:
   . des numéros de cartes de paiement,
   . des numéros de comptes bancaires et
   . des mots de passe pour accéder à des logiciels de paiement, des sites de paiement ou un répertoire/fonction de navigateur d'informations pouvant être utilisées pour effectuer un paiement, répertoire/fonction de navigateur appelé " wallet " en anglais.
- d'autres informations à protéger confidentielles considérées comme " critiques " , telles que des numéros de sécurité sociale, de pièces d'identité, nom de jeune fille, prénoms des enfants, nom de l'école des enfants,
- d'autres informations à protéger confidentielles considérées comme non critiques, somme le code postal, le numéro de l'adresse dans une rue, des mots clés comme " garçon " ou " fille " ,
- l'acceptation de partager (c'est-à-dire de transmettre à une base de données, de manière anonyme) une indication de satisfaction et/ou une indication de ponctualité de livraison liées à un identificateur du site fournisseur concerné,
- la manière dont le logiciel d'assistance réagit lorsqu'il détecte la saisie d'une information critique, c'est-à-dire en demandant la saisie du mot de passe, en affichant une fenêtre de mise en garde contre les dangers fiés à la transmission de cette information confidentielle, et/ou la mémorisation en mémoire non volatile de l'enregistrement en cours lorsque cette information critique est détectée,
- la manière dont le logiciel d'assistance réagit lorsqu'il détecte une information confidentielle non critique, en affichant une mise en garde et/ou en effectuant une mémorisation en mémoire non volatile de l'enregistrement en cours lorsque cette information non critique est détectée,
- le répertoire dans lequel les enregistrements et/ou les certificats d'intégrité doivent être stockés, c'est-à-dire dans quel répertoire, sur quelle mémoire liée à un réseau local, sur le site tiers de protection 170, sur un site tiers de confiance 180 (On observe que plusieurs destinations peuvent être choisies simultanément pour ces enregistrements)
- si les enregistrements ne concernant aucune information confidentielle doivent être conservés,
- quand la surveillance des informations confidentielles doit avoir lieu, par exemple, soit à tout moment, soit dès qu'un logiciel de navigation est actif, soit seulement lorsque l'utilisateur est relié à un site distant ;
- une quantité de mémoire allouée aux enregistrements du logiciel d'assistance,

On observe que les informations à protéger peuvent aussi comporter des mots clés associés, par construction, au logiciel d'assistance, tels que " signature " , " bon de commande " , " carte de crédit " (en anglais " credit card " ), " adresse " , " e-mail address " , " visa (marque déposée), " mastercard " (marque déposée), ou des mots clés référencés dans une base de données accessible au terminal utilisateur, par exemple en regard de chaque site répertorié dans cette base de données, en regard du pays correspondant au site dans cette base de données (le pays du site étant identifié par la terminaison du nom de domaine ou l'appel à un serveur de noms de domaine DNS) ou pour tous les sites visités.

Le choix de chacun de ces paramètres est conditionné à une authentification de l'utilisateur (demande de mot de passe ou toute autre signature).
- visualiser les informations concernant un site distant 150 permet d'afficher les informations concernant le site distant 150 que l'utilisateur visite, informations qui sont accessibles au terminal 100, par exemple en étant conservées ou retrouvées par le site tiers de protection 170,
- suspendre l'exécution du logiciel d'assistance permet de suspendre la surveillance de transaction et
- quitter le logiciel d'assistance permet d'arrêter le fonctionnement du logiciel d'assistance et d'effacer l'enregistrement en cours, ou non, selon des variantes.

Le choix de chacune de ces deux dernières fonctions est conditionné à une authentification de l'utilisateur. Lorsque le menu est sélectionné, le mot de passe n'est, cependant, demandé qu'une seule fois jusqu'à ce que le menu soit refermé.

Pour des raisons de simplification de la description en ce qui concerne des fonctions techniques biens connues de l'homme du métier, la mise en oeuvre des options ci-dessus n'est pas détaillée ici.

Ensuite, au cours du fonctionnement du logiciel d'assistance, lorsque les options du menu du logiciel d'assistance ne sont pas affichées ou utilisées, au cours d'un test 202, est déterminé si la surveillance de transaction doit commencer. Ce test 202 dépend du paramétrage ou des options de menu choisis par l'utilisateur comme exposé plus haut ou du paramétrage du logiciel par défaut. En variante, le résultat du test dépend des sites déjà visités par l'utilisateur depuis qu'il a démarré le terminal 100. Par exemple, la surveillance ne démarre qu'après passage sur un site ou une adresse prédéterminée, par exemple d'un fournisseur d'accès à Internet, d'un site dédié à la protection juridique, d'un moteur de recherche.

Lorsque le résultat du test 202 est négatif, le test 202 est réitéré. Lorsque le résultat du test 202 est positif, au cours d'un test 203, il est déterminé si la surveillance de transaction doit s'achever, en fonction des paramètres et options de menu mis en oeuvre par l'utilisateur. Lorsque le résultat du test 203 est positif, le test 202 est réitéré. Lorsque le résultat du test 203 est négatif, au cours d'un test 204, il est déterminé si le terminal 100 est relié à un site distant. Par exemple, au cours de l'opération 204, on détermine si le terminal 100 est relié à un site distant 150 en émettant une requête de connexion à un autre site distant, par exemple un serveur de noms de domaines (DNS) et en observant la réponse obtenue. Selon un autre exemple, on détermine si le terminal 100 est relié à un site distant en déterminant si la fenêtre active sur ce terminal 100 est une fenêtre de logiciel de navigation sur Internet (par exemple des marques déposés Microsoft Internet Explorer ou Netscape Navigator).

Si le résultat du test 204 est négatif, le test 205 est effectué. Si le résultat du test 204 est positif, l'opération 207 est effectuée.

Au cours du test 205, est déterminé si une information à protéger est mise en oeuvre. La détection d'une information à protéger peut être effectuée de différentes manières, comme, par exemple :
- par surveillance des symboles saisis au clavier 105 et comparaison avec les informations à protéger fournies par l'utilisateur au moment de l'installation ou du paramétrage du logiciel d'assistance,
- par surveillance d'autres moyens d'entrée d'information non représentés (comme un microphone et une carte de reconnaissance de parole) et comparaison avec les informations à protéger fournies par l'utilisateur au moment de l'installation ou du paramétrage du logiciel d'assistance,
- par surveillance des informations reçues (par exemple par reconnaissance optique de caractère et/ou détection de mots clés dans un courrier électronique reçu ou en cours de rédaction, mots clés tels que " signature " , " bon de commande " , " carte de crédit " (en anglais " credit card " ), " adresse " , " e-mail address " , " visa " (marque déposée), " mastercard " (marque déposée),...)
- par surveillance du contenu du presse-papiers pour y trouver des informations à protéger fournies par l'utilisateur au cours de l'installation ou du paramétrage du logiciel d'assistance,
- par surveillance de la copie de fichiers présents dans la mémoire 108, fichiers qui peuvent contenir des informations à protéger (ces fichiers sont détectés, de manière connue, par recherche dans tous les fichiers conservés par le terminal 100, des qu'une nouvelle information confidentielle est fournie par l'utilisateur à titre d'information à protéger au cours d'une opération de paramétrage), et/ou
- par surveillance de routines ou de logiciels mis en oeuvre au cours d'une authentification par clés asymétriques ou d'une signature à clés asymétriques (voir en particulier les crypto-API et les ActivX).

Par exemple, la surveillance d'informations à protéger consiste en la comparaison de caractéristiques d'informations à protéger avec des caractéristiques d'informations mises en oeuvre par le terminal 100, à chaque instant, ou pendant des périodes de surveillance et lorsque ces caractéristiques se correspondent, à considérer qu'une information à protéger à été détectée et donc qu'une transaction est détectée.

Si le résultat du test 205 est négatif, le test 204 est réitéré. Si le résultat du test 205 est positif, au cours de l'opération 206, le traitement de la détection de l'information à protéger est effectué. Selon les paramètres choisis par l'utilisateur ou les paramètres du logiciel par défaut,
- une fenêtre de mise en garde, dont le contenu dépend préférentiellement de l'information confidentielle détectée, est affichée,
- l'image affichée au moment de la détection de l'information confidentielle est mise en mémoire,
- une authentification de l'utilisateur est demandée, par exemple, sous la forme de la demande du mot de passe.

A la suite de l'opération 206, le test 203 est réitéré.

Au cours de l'opération 207, et pendant que l'utilisateur visite le site distant 150, le logiciel d'assistance effectue différentes opérations,
- à chaque fois que l'utilisateur accède à un nouveau site distant qui n'est pas un site sur lequel une transaction entamée sur le précédent site distant peut être poursuivie (comme indiqué par ailleurs dans la présente description), le logiciel d'assistance entame un enregistrement qui est conserve en mémoire 108 et l'icône spécifique au logiciel d'assistance commence à clignoter dans la barre d'outils ;
- à chaque fois que l'utilisateur accède à un nouveau site distant qui n'est pas un site sur lequel une transaction entamée sur le précédent site distant peut être poursuivie (comme indique par ailleurs dans la présente description), le logiciel d'assistance fournit au site tiers de protection 170 un identifiant du nouveau site distant 150, et attends, en retour, une information concernant le site nouveau site distant 150 (taux de satisfaction des précédents clients, taux de ponctualité constatés par les précédents clients, taux de respect de vie privée, adresses des pages a contenu légal, par exemple page des termes et conditions, de la garantie, des conditions de remboursement, de livraison, de traitement des informations confidentielles, pays du site, principales lois de protection du consommateur applicables à la transaction,...). Pendant que le terminal 100 attend la réponse, l'icône clignote en orange, si des informations sont reçues de la part du site 170 dans un délai prédéterminé, l'icône se met à clignoter en vert, et, sinon, l'icône se met à clignoter en rouge ;
- à chaque fois que l'utilisateur quitte un site distant 150 sans aller sur un autre site distant qui n'est pas un site sur lequel une transaction entamée sur le précédent site distant peut être poursuivie (comme indiqué par ailleurs dans la présente description), sans qu'aucune transaction n'ait été détectée, en fonction du paramétrage choisi par l'utilisateur ou du paramétrage par défaut du logiciel d'assistance, soit l'enregistrement est détruit, soit il est conservé et mis dans la liste des enregistrements effectués avec un indicateur permettant son effacement automatique après une la durée de conservation prédéterminée ou en fonction d'espace mémoire disponible pour les enregistrements du logiciel d'assistance.
   Dans ce cas, selon les variantes de modes de réalisation de la présente invention, cet enregistrement est doté, ou non, d'un certificat d'intégrité.

On observe ici que l'enregistrement effectué comporte préférentiellement une compression d'image sans perte de ce qui est affiché sur l'écran 104, par exemple, chaque seconde, lorsque, au cours de ladite seconde le dispositif de pointage (la souris) a été utilise soit en déplacement soit par appui sur l'un de ses boutons ou si le clavier ou un autre dispositif d'entrée d'information a été mis en oeuvre.

L'enregistrement comporte, pour chaque image, l'heure (y compris minute, seconde et, éventuellement fraction de seconde) à laquelle elle a été prise ou, ce qui revient au même, combien de temps a séparé la prise de cette image de la prise de l'image suivante. De cette manière la séquence des images affichées sur l'écran 104 peut être visualisée ultérieurement avec les durées d'affichage de chaque image qui correspondent à leur durée d'affichage initial. L'enregistrement permet ainsi de restituer, par exemple en format vidéo, tel que le format " . AVI " bien connu de l'homme du métier une visualisation en images animées de la visite du site. Ceci permet, par exemple que tout dispositif capable de lire ce type de format puisse visualiser l'enregistrement en question.

Au cours du test 208, il est déterminé si une transaction est détectée. La détection d'une transaction peut être effectuée de différentes manières, comme, par exemple :
- par surveillance des symboles saisis au clavier 105 et comparaison avec les informations à protéger fournies par l'utilisateur au moment de l'installation ou du paramétrage du logiciel d'assistance, par détection du passage en mode de communication sécurisé (encrypté), par exemple en détectant la présence de la racine " https " dans une adresse de page reçue,
- par surveillance d'autres moyens d'entrée d'information non représentés (comme un microphone et une carte de reconnaissance de parole) et comparaison des informations entrées avec les informations à protéger, -par surveillance des informations reçues (par exemple par reconnaissance optique de caractère et/ou détection de mots clés dans la description en langage HTML ou XML de la page, mots clés tels que " signature " , " bon de commande " , " carte de crédit " (en anglais " credit card " ), " adresse " , " e-mail address " , " visa " (marque déposée), " mastercard " (marque déposée),...),
- par surveillance du contenu du presse-papiers pour y trouver des informations à protéger fournies par l'utilisateur au cours de l'installation ou du paramétrage du logiciel d'assistance,
- par surveillance de la copie de fichiers présents dans la mémoire 108, fichiers qui peuvent contenir des informations à protéger (ces fichiers sont détectés, de manière connue, dès qu'une nouvelle information confidentielle est fournie par l'utilisateur à titre d'information à protéger),
- par surveillance de routines ou de logiciels mis en oeuvre au cours d'une authentification par clés asymétriques ou d'une signature à clés asymétriques (voir en particulier les crypto-API et les ActivX),
- par comparaison de l'adresse de la page visitée avec des adresses conservées dans une base de données accessible au terminal 100, en relation avec le site visité (Selon un exemple, l'adresse de la page reçue n'est comparée qu'avec une ou plusieurs adresses correspondant, dans une base de données accessible au terminal 100, au site visité identifié par son nom de domaine)et/ou
- par comparaison de l'adresse de la page visitée avec des adresses conservées dans une base de données accessible au terminal 100, lorsque le site visité n'y est pas répertorié (par exemple adresses de pages de paiement de sites bancaire ou adresses de sites de déclaration fiscale ou sociale).

On observe que pour la détection de mots clés dans la description de la page, on peut soit scruter les informations transitant sur un port de communication du terminal 100, ou en relation avec le logiciel de navigation, soit utiliser une routine de lecture de la description de la page et rechercher les mots clés dans cette description.

On observe que, pour mettre en oeuvre certaines méthodes ci-dessus, le logiciel d'assistance effectue une requête auprès du site tiers de protection 170 en lui indiquant le nom de domaine du site distant 150 et reçoit en retour :-si le site distant 150 est répertorié dans une base de données du site 170, des adresses de page indicative de transaction ou de préparation de transaction (panier, commande, paiement, cart, checkout, one-click)et/ou des noms de domaines d'au moins un site associé au site distant 150, site associé sur lequel une transaction entamée sur le site distant 150 peut se poursuivre (par exemple site de paiement ou site affilié ou nom de domaine avec une autre terminaison que le nom de domaine du site distant 150) et/ou des mots clés à surveiller sur le site distant 150, et/ou une indication de type de transaction pouvant être effectué sur le site distant 150 (achat neuf, achats d'occasion, aux enchères, de produits reconditionnés, titres de transport, produits ou services adressés à des mineurs, fourniture d'information, produit ou service, site partenaire du site de protection 170, déclarations administratives, utilisation d'une signature électronique à clés asymétrique),
- si le site distant 150 n'est pas répertorié dans la base de données du site 170, des adresses ou noms de sites de même nationalité ou région géographique que le site distant 150 et dédiés à la finalisation de transactions (par exemple pour signer ou pour payer en dehors du site distant) et/ou des mots clés susceptibles d'indiquer une transaction.

Si le résultat du test 208 est négatif, le test 204 est réitéré et l'opération 207 est poursuivie tant que le résultat du test 204 est positif. Si le résultat du test 208 est positif, au cours de l'opération 209, le traitement de la transaction est effectué. Selon les paramètres choisis par l'utilisateur ou les paramètres du logiciel par défaut :
- une fenêtre d'information, dont le contenu est contextuel et dépend du site distant 150, est affichée (A cet effet, une requête au site 170, qui peut être identique à la requête exposée plus haut, est adressée au site 170 pour recevoir en retour des adresses de pages à contenu légal du site 150, notice administrative ou conditions générales de vente ; de l'information dépendant du pays du site 150, par exemple aperçu des lois de protection du consommateur ou du déclarant applicables à la transaction ; de l'information dépendant du site 150, par exemple accès à des moteurs de recherche de meilleurs prix ou à des offres concurrentes du site 150 ou conseils pour le type de transaction usuel sur le site 150 (achat aux enchères, achats de produits d'occasion ou reconditionnés, transactions d'enfants...) ; et de l'information indépendante du site 150, par exemple des conseils aux acheteurs en ligne ; l'enregistrement en cours est mis en mémoire à l'endroit choisi (l'opération de mémorisation en mémoire non volatile peut être effectuée dans l'un ou plusieurs des lieux suivants : dans le terminal 100, dans le site de protection 170, par transmission d'un fichier à une adresse Internet ou une adresse e-mail prédéterminée ou dans un site tiers de confiance 180, par inscription dans une base de données sécurisée, par exemple, dès que l'utilisateur quitte le site distant 150 en question, l'enregistrement étant associé à un certificat d'intégrité, une date d'enregistrement certifiée (car provenant du site de protection 170), les contenus des pages à contenu légal dudit site 150, le cas échéant, le terminal 100 effectue une requête auprès du site tiers de protection 170 pour obtenir les adresses URLs des pages à contenu légal du site distant 150 puis le téléchargement sur le site distant 150 de ces pages, sans les afficher sur l'écran 104 et les conserve dans leur format d'origine, par exemple HTML ou XML, un double du certificat d'intégrité est envoyé au site de protection 170, avec, éventuellement, la liste des pages du site distant 150 (et des sites sur lesquels une transaction entamée sur le site distant 150 s'est poursuivie, comme indiqué par ailleurs dans la présente description) visitées par l'utilisateur, par exemple pour constituer un enregistrement représentatif de celui conservé par l'utilisateur mais ne comportant que tes adresses ou les contenus des pages au format HTML (et non des séquences d'images comprimées comme l'enregistrement de l'utilisateur), afin de témoigner, au cas où la relation entre l'utilisateur du terminal 100 et le site 150 devait donner lieu à un litige ultérieur, dès que l'utilisateur quitte le site distant 150 distant en question, ou un site sur lequel une transaction entamée sur le site distant 150 peut être poursuivie comme indiqué par ailleurs dans la présente description, une fenêtre lui demandant au moins une date de réalisation ou de rappel d'une action ultérieure, telle qu'une livraison de produit ou service commandé, est affichée et l'utilisateur peut choisir une date à laquelle cette action lui sera rappelée ; par défaut, la date est fixée à une durée prédéterminée suivant la transaction, ladite durée prédéterminée pouvant dépendre du type de transaction, des lois applicables à la transaction avec le site (voir autres modes de réalisation de l'invention), par exemple, si l'utilisateur dispose de sept jours pour annuler une commande, au bout de ce délai après la transaction, une fenêtre est ouverte sur l'écran 104 du terminal 100 et demande à l'utilisateur s'il veut annuler sa commande, s'il répond oui, le logiciel d'assistance donne accès à une page du site tiers de protection 170 qui permet d'envoyer un e-mail à l'adresse du service consommateur du site distant 150 ; par exemple, si une livraison moyenne pour le type de transaction effectué sur le site distant 150 est indiqué de dix jours, dans la base de données du site tiers de protection 170, et si l'utilisateur ne change pas ce délai dans sa réponse, au bout de ce délai de dix jours suivant la transaction, une fenêtre est automatiquement ouverte sur l'écran 104 pour demander à l'utilisateur si la livraison a été faite et est satisfaisante, et si la réponse est non, on propose à l'utilisateur de choisir une nouvelle date (et la procédure recommence) ou de déposer une réclamation auprès du site distant 150 ou du site tiers de protection 170, par l'accès à une page du site tiers de protection 170 permettant de répondre à différentes questions (en arborescence) pour que l'utilisateur indique quel type de problème l'utilisateur a rencontré, pour qu'il transmette automatiquement, avec ses réponses pour la réclamation, une copie de la trace concernant la transaction en question, et la suite qu'il souhaite voir appliquée à sa réclamation ; la réclamation est alors automatiquement traitée par le site tiers de protection 170 ou le site distant 150 pour donner satisfaction à l'utilisateur, -une authentification de l'utilisateur est demandée, par exemple, sous la forme de la demande du mot de passe.

On observe que, en fonction d'une indication de type de transaction pouvant être effectué sur le site distant 150 (achat neuf, achat d'occasion, aux enchères, de produits reconditionnés, titres de transport, produits ou services adressés à des mineurs, fourniture d'information, produit ou service, site partenaire du site de protection 170, déclarations administratives, utilisation d'une signature électronique à clés asymétriques), le traitement de la transaction peut varier, par exemple, conservation pendant différentes durées ou en différents lieux de l'enregistrement, affichages d'offres ou de conseils différents. Par exemple, pour le type " titres de transport " , l'enregistrement peut être stocké sur le site tiers de protection 170 pour permettre à l'utilisateur de faire valoir ses droits immédiatement si lorsqu'il se présente à l'embarquement, on lui indique que le titre de transport n'a pas été émis. Par exemple, pour le type " produits ou services destinés à des mineurs " , le traitement de la transaction comporte une interdiction sur une liste de sites réservés aux adultes, une mise en garde particulière destinée aux mineurs, l'émission d'un message à une adresse de courrier électronique, message comportant ou non une copie de l'enregistrement, ou l'appel d'un numéro de téléphone correspondant aux parents). Par exemple, pour les sites partenaires du site de protection 170, aucune publicité n'est affichée mais un signal représentatif de la présence du logiciel d'assistance sur le terminal 100 est transmis au site distant 150, avec ou sans transmission de l'enregistrement. Par exemple, pour les déclarations administratives, le logiciel d'assistance propose à l'utilisateur de conserver l'enregistrement sur un CD gravé dont la durée de vie peut dépasser celle du terminal 100 ou sur l'un des sites 170 et 180. Par exemple, pour les achats d'occasion et/ou les titres de transport, la durée de conservation de l'enregistrement peut être de six mois, l'utilisateur du terminal 100 se voyant proposé, au bout de six après la transaction, l'effacement de l'enregistrement alors que pour les transactions de produits neufs, la durée est portée à deux années. Par exemple, pour certains types de transaction, comme la fourniture d'information, la compression appliquée aux données de l'enregistrement est différente, par exemple plus forte, que pour d'autres types de transaction. Cette compression peut d'ailleurs être progressive dans le temps en fonction du type de transaction, par exemple avec le fichier d'images compressées pendant une première durée dépendant, ou non, du type de transaction puis sans le fichier d'images ou avec un fichier image plus comprimé, ultérieurement. Par exemple, lorsque aucune signature électronique n'est mise en oeuvre, !'enregistrement est automatiquement transmis au site tiers de confiance 180.

A la suite de l'opération 209, le test 203 est réitéré.

On observe que, selon des variantes, les images mémorisées comportent, ou non, la position du marqueur (ou curseur) de la souris 103 ou d'un dispositif de pointage compatible. A cet effet, le logiciel d'assistance capte à tous moments, d'une part, l'écran, de manière connue, et, d'autre part, la forme du curseur de la souris et ses coordonnées à l'écran. Le logiciel insère alors le curseur dans l'image capturée à l'endroit indiqué par lesdites coordonnées et enregistre l'image résultante.

Dès qu'un enregistrement d'une transaction financière a été enregistré en mémoire non volatile en vue d'une conservation prolongée (au delà de la durée de fonctionnement continu du terminal100), le logiciel d'assistance calcule une combinaison mathématique des données de l'enregistrement (par exemple, une fonction connue sous le nom de " condensât " , en anglais " hash " , une fonction connue sous le nom de " checksum " pour " somme de vérification " ou une fonction connue sous le nom de " CRC " pour " code de redondance " ou " code de correction " ). Cette combinaison mathématique est appelée certificat d'intégrité car si le fichier est modifié ultérieurement, la valeur de cette combinaison mathématique changera si bien que la modification ultérieure sera détectée. Le terminal 100 ou le logiciel d'assistance envoient alors au site tiers de protection 170 les informations suivantes :
- Numéro de série du logiciel d'assistance,
- nom de domaine ou adresse Internet URL du site 150,
- le certificat d'intégrité,
- la taille du fichier d'images compressées,
- la date et heure universelle sur le terminal 100 à la fin de la transaction.

En retour, le logiciel d'assistance obtient, de la part du site 170 et mémorise, de manière associée à l'enregistrement concerné :
- Un numéro unique identifiant la transaction sur le serveur du site 170,
- la date sur le serveur du site 170 à laquelle la transaction a été enregistrée
- la date sur le terminal 100 d'enregistrement de la transaction (afin de confirmer que la date reçue est correcte et d'avoir exactement ce qui est enregistré au niveau du serveur, pour tenir compte, notamment, des problèmes de fuseau horaire).

Lors de l'exportation (fonction mise en oeuvre par utilisation du menu du logiciel d'assistance et de l'option d'édition d'enregistrements) le logiciel d'assistance génère 3 types de fichiers, compressés ou non :
- des fichiers de pages à contenu légal (par exemple au format HTML ou XML) du site 150,
- un fichier d'images, par exemple dans un format vidéo, tel que le format AVI,
- un certificat d'intégrité contenant un autre certificat d'intégrité calculé sur les fichiers de page et le fichier d'images, ainsi que la taille de ces fichiers.

Il contient également le numéro de la transaction d'origine, ainsi que les dates d'enregistrement de la transaction du serveur du site 170 et du terminal 100, le certificat d'intégrité du fichier d'image d'origine, sa taille et chaque date de rappel d'action devant être fait à l'utilisateur. Un certificat d'intégrité est aussi calculé sur le certificat d'intégrité principal. Il associe à ces fichiers un logiciel de compression et de calcul du certificat d'intégrité. Ainsi, un destinataire des fichiers exportés pourra détecter tout changement ultérieur à leur création, sur un des fichiers exportés en recalculant le certificat d'intégrité et en le comparant au certificat d'intégrité reçu. Il pourra aussi vérifier la validité du certificat d'intégrité reçu par requête auprès du site tiers de protection 170.

A titre d'exemple, les certificats d'intégrités sont calculés selon la méthode connue sous le nom de CRC-32 ou de CRC à 128 bits.

Selon une variante non représentée, dans un réseau local, chaque poste est doté du logiciel d'assistance et effectue les opérations présentées dans l'un des modes de réalisation ci-dessus et conserve localement les enregistrements, ou trace, qu'il réalise. Puis, à intervalle de temps régulier, par exemple, chaque nuit, les enregistrements sont collectés par un serveur de réseau sur tous les postes du réseau.

Dans des exemples de réalisation, une opération de datation attribue une date à l'une au moins des opérations de réception et de mémorisation en mémoire non volatile, ladite date étant mémorisée en association avec l'information représentative de ladite succession de pages et le certificat d'intégrité rend détectable une modification de ladite date ultérieurement à sa mémorisation en mémoire non volatile. Préférentiellement, une telle datation est effectuée en fonction d'une horloge indépendante du terminal 100.

Dans des exemples de réalisation, la durée d'affichage de chaque page du site distant 150 est mémorisée en association avec l'information représentative de ladite page. En variante, le certificat d'intégrité rend détectable une modification de ladite durée ultérieurement à sa mémorisation en mémoire non volatile. Ainsi, l'enregistrement peut témoigner du déroutement temporel de la communication considérée.

Dans des exemples de réalisation, au cours de l'opération de mémorisation en mémoire non volatile, sont mémorisées des indicateurs des parties des pages reçues qui sont affichées au cours de l'opération d'affichage. Ainsi, l'enregistrement peut témoigner de ce que le visiteur du site a eu sous les yeux au cours de la visite du site (aussi appelée communication avec le site dans le reste de la présente demande) mais aussi du contenu des pages que l'utilisateur n'a pas eu sous ses yeux, tout en utilisant un format de description de l'intégralité de la page, ce format (par exemple HTML) pouvant permettre la conservation de données mieux compressées qu'un format image, par exemple.

Dans des exemples de réalisation, au cours de l'opération de mémorisation en mémoire non volatile, ne sont pas mémorisées les parties des pages reçues du site 150 sur requête (clic ou saisie d'adresse URL) de l'utilisateur qui ne sont pas affichées au cours de l'opération d'affichage. Ainsi, la quantité d'information mémorisée est limitée aux informations qui témoignent de ce qui a été mis sous les yeux de l'utilisateur. Ces informations peuvent néanmoins être complétées par des pages reçues du site 150 sans requête de l'utilisateur (pages à contenu légal téléchargées comme indique ci-dessus).

Dans des exemples de réalisation, l'enregistrement mémorisée au cours de l'opération de mémorisation en mémoire non volatile comporte l'information au format texte des pages reçues du site 150.

Dans des exemples de réalisation, il est prévu une opération d'effacement de l'enregistrement, ladite opération d'effacement dépendant de la détection d'une transaction avec le site distant 150. Ainsi, l'enregistrement peut être conservé plus ou moins longtemps en fonction du fait qu'une transaction a eu lieu, ou non, au cours de la communication que cet enregistrement concerne.

Selon une variante, seuls des sites représentés par un nom de domaine dans une base de données accessible au terminal 100 (présente sur ce terminal ou sur le site 170, par exemple) donnent lieu à surveillance (la détection de ces sites est effectuée en comparant l'adresse du navigateur actif avec les noms de domaines conservés dans la base de données).

Selon une variante, l'enregistrement est suspendu dès qu'une transaction est détectée afin d'empêcher que des informations confidentielles de l'utilisateur ne soient mises en mémoire dans l'enregistrement. L'enregistrement comporte alors les conditions dans lesquelles l'utilisateur a donné son consentement de contracter et, éventuellement, les pages à contenu légal du site distant 150.

Selon une variante, une copie de l'enregistrement correspondant à une transaction est envoyée au site après une opération de vérification que le site accepte cet enregistrement, selon un protocole de communication de type requête-réponse.

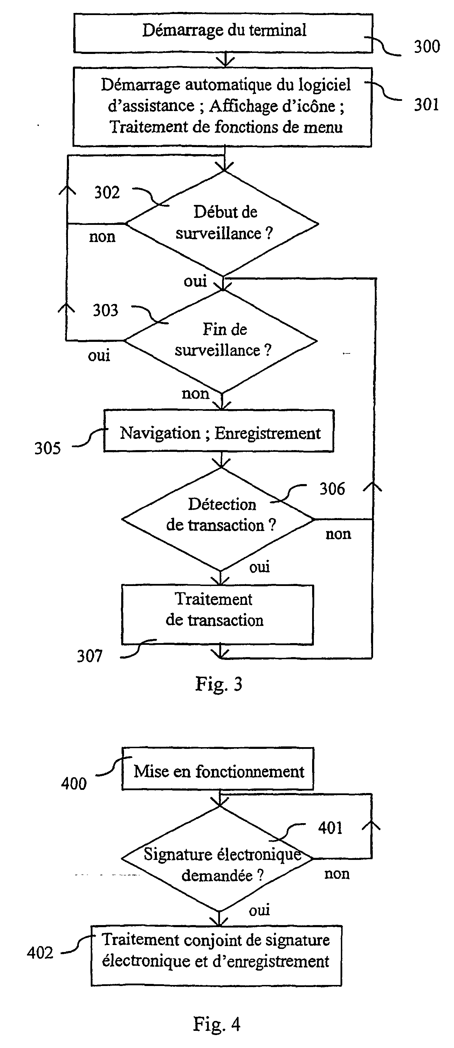

Le mode de réalisation illustré en figure 3 est plus particulièrement destiné au cas où l'utilisateur effectue des transactions avec un terminal portable (différent du terminal 100) qui ne comporte pas assez de mémoire disponible pour conserver des informations ou traces de chaque transaction. Par exemple, ce terminal portable est un téléphone mobile, un assistant personnel ( " PDA " ) ou un ordinateur portable, ultra-portable ou de poche. Le logiciel d'assistance est alors mis en oeuvre dans un système informatique qui reçoit une information représentative de l'information reçue par le terminal de l'utilisateur. Par exemple, le logiciel d'assistance fonctionne, au moins pour partie, dans le serveur d'un site portail ou fournisseur d'accès à Internet (en anglais " ISP " pour Internet Service Provider) par lequel l'utilisateur accède à des ressources du réseau de communication. Une autre partie du logiciel d'assistance est mise en oeuvre dans un terminal tel que le terminal 100 pour recevoir des enregistrements faits par ledit serveur, par exemple sous forme de fichiers attachés à des courriers électroniques. Cette autre partie du logiciel peut être similaire au logiciel d'assistance illustré en regard des figures 1 à 2, avec, en outre, une fonction d'importation d'enregistrements effectués à partir d'un terminal portable.

Par simplification, on n'a considéré dans la description qui suit que le cas où seules les transactions sont protégées, c'est à dire que les transactions sont détectées en relation avec tes informations financières à protéger, une authentification ou une signature électronique à clé asymétrique ou des adresses, noms de domaine ou contenus de pages visitées. Cependant, avec ou sans adjoindre une partie du logiciel d'assistance implantée sur le terminal portable, les autres modes de détection de transaction indiqués en regard de l'opération 208 en figure 2, peuvent être mis en oeuvre.

A la suite d'une opération 300 de démarrage du terminal portable et de mise en relation de ce terminal portable avec le serveur mettant en oeuvre le logiciel d'assistance, au cours de l'opération 301, le logiciel d'assistance est automatiquement mis en fonctionnement et provoque l'affichage par l'écran de visualisation 104, d'une icône spécifique audit logiciel d'assistance. En sélectionnant cette icône, l'utilisateur accède à des fonctions en ligne du logiciel d'assistance, et, en particulier, fait apparaître un menu qui comporte les options suivantes :
- commencer un enregistrement,
- préférences/paramétrage,
- visualiser les informations concernant un site, et
- suspendre l'exécution du logiciel d'assistance.

Ces options ont déjà été détaxées en regard de la figure 2. On observe cependant que et leur mise en oeuvre se fait en ligne par le logiciel d'assistance, chaque sélection d'option donnant lieu à une requête à ce logiciel, de la même manière qu'un lien hypertexte entre des pages accessibles sur Internet.

Ensuite, au cours du fonctionnement du logiciel d'assistance, lorsque les options du menu du logiciel d'assistance ne sont pas affichées ou utilisées, au cours d'un test 302, il est déterminé si la surveillance de transaction doit commencer. Ce test 302 dépend du paramétrage ou des options de menu choisis par l'utilisateur comme exposé plus haut ou du paramétrage du logiciel par défaut.

Lorsque le résultat du test 302 est négatif, le test 302 est réitéré. Lorsque le résultat du test 302 est positif, au cours d'un test 303, il est déterminé si la surveillance de transaction doit s'achever. Ce test 303 dépend du paramétrage ou d'options de menu choisis par l'utilisateur ou par défaut. Lorsque le résultat du test 303 est positif, le test 302 est réitéré. Lorsque le résultat du test 303 est négatif, au cours d'une opération 305, et pendant que l'utilisateur utilise son terminal portable pour communiquer sur le réseau, le logiciel d'assistance effectue différentes opérations,
- à chaque fois que l'utilisateur accède à un nouveau site, le logiciel d'assistance entame un enregistrement de tout ce qui est transmis à l'utilisateur, cet enregistrement est conservé dans le serveur ;
- à chaque fois que l'utilisateur accède à un nouveau site, le logiciel d'assistance indique à l'utilisateur s'il dispose d'informations concernant le site visité (taux de satisfaction des précédents clients, taux de ponctualité constatés par les précédents clients, taux de respect de vie privée, adresses des pages a contenu légat, par exemple page des termes et conditions, de la garantie, des conditions de remboursement, de livraison, de traitement des informations confidentielles, pays du site, principales lois de protection du consommateur applicables à la transaction,...) ;
- à chaque fois que l'utilisateur quitte un site sans qu'aucune transaction n'ait été détectée, en fonction du paramétrage choisi par l'utilisateur ou du paramétrage par défaut du logiciel d'assistance, soit l'enregistrement est détruit, soit il est conservé dans le lieu choisi par l'utilisateur. Dans ce cas, selon les variantes de modes de réalisation de la présente invention, cet enregistrement est doté, ou non, d'un certificat d'intégrité.

L'enregistrement comporte, pour l'ensemble des informations transmises au terminal utilisateur, pendant la navigation, l'heure (y compris date, heure, minute, seconde et, éventuellement fractions de seconde) de la communication et sa durée précise.

Ensuite, au cours du test 306, il est déterminé si une transaction a lieu d'au moins l'une des manières exposées en regard de l'opération 208 de la figure 2.

Si le résultat du test 306 est négatif, l'opération 305 est poursuivie. Si le résultat du test 306 est positif, au cours de l'opération 307, le traitement de la transaction est effectué comme indiqué en regard de l'opération 209 de la figure 2.

A la suite de l'opération 307, le test 303 est réitéré.

On observe ici que, pour chacun des modes de réalisation de la présente invention, la surveillance d'une transaction peut, par exemple, avoir lieu en permanence, seulement lorsqu'un logiciel de communication sur un réseau est en fonctionnement (tel qu'un logiciel d'accès à un fournisseur d'accès en ligne et/ou de rédaction de courriers électroniques), seulement lorsque le terminal est connecté à un autre système informatique à travers un réseau de communication, par exemple l'Internet ou un intranet ou seulement lorsque le terminal est connecté à un autre système informatique à travers une connexion sécurisée d'un réseau de communication. Ceci peut être fixé par fabrication, par défaut ou par paramétrage du logiciel d'assistance par l'un de ses utilisateurs, par exemple.

En variante, la mise en oeuvre de l'opération de conservation en mémoire de l'enregistrement, dépend de la détection d'une transaction au cours de la communication avec un site 150. Par exemple
- si une transaction financière ou une signature est détectée, la conservation de l'enregistrement est effectuée et comporte en format images compressées, la séquence des images affichées sur l'écran 104 (les portions des pages reçues du site et affichées), les pages HTML des pages du site 150 à contenu légal, une date certifiée et un certificat d'intégrité de l'enregistrement et, une conservation selon un format texte dans le site de protection 170 des fichiers texte des pages reçues par le terminal 100 et des pages à contenu légal de ce site ;
- sinon, et si une information confidentielle critique est détectée, les pages HTML reçues de la part du site sont conservées ainsi qu'une page à contenu juridique précisant la pratique du site en matière de respect de vie privée et/ou protection de données;
- sinon, si une information confidentielle non critique est détectée, seul les fichiers des pages correspondant à du texte sont conservés ;
- sinon, aucune conservation d'information n'est effectuée.

De même, l'effacement automatique de l'enregistrement, le moment de cet éventuel effacement automatique, la compression de l'enregistrement, et/ou une invitation de l'utilisateur à effacer cet enregistrement, dépendent préférentiellement du type d'information à protéger (financières, critiques ou non critiques) que cet enregistrement concerne.

Le lecteur pourra s'appuyer sur la description des autres modes de réalisation et des documents incorporés par référence pour la mise en oeuvre de chaque caractéristique technique du mode de réalisation exposé ici.

Dans le cas d'un accès à Internet par l'intermédiaire d'un dispositif possédant peu de mémoire disponible, l'enregistrement ou l'enregistrement simplifié (c'est-à-dire l'enregistrement d'une partie des informations reçues par le terminal) peuvent être envoyés automatiquement à une adresse Internet donnée, à un site de conservation de documents, tel que Xdrive (marque déposée), ou en attachement à un courrier électronique à une adresse e-mail choisie par l'utilisateur.

Dans le cas d'un accès avec un téléphone mobile, le portail d'accès peut réaliser les fonctions exposées ci-dessus en regard de l'un ou l'autre des exemples de réalisation de la présente invention.

Selon une variante non représentée, le logiciel d'assistance protège l'utilisateur en transmettant, automatiquement au site 150 ou à un interlocuteur à distance, une information complémentaire à la communication avec ce site ou cet interlocuteur. Cette transmission ou cet ajout dépendent d'au moins l'un des critères suivants :
- l'identité de l'une des personnes parties à la communication, et/ou
- le contenu des informations communiquées entre les parties à la communication.

Dans des exemples de réalisation, ladite information ajoutée comporte une limitation de la portée juridique de ladite communication. Par exemple, l'information ajoutée indique " une communication a eu lieu avec un membre du personnel de l'entreprise, tout engagement de l'entreprise est assujetti à la signature de l'un de ses mandataires sociaux. L'interlocuteur de l'entreprise est responsable de vérifié s'il est nécessaire de confirmer le contenu de la communication qui a eu lieu auprès d'un responsable de l'entreprise. Pour obtenir une signature, cliquez ici " . Le fait de sélectionner le mot " ici " provoque la transmission d'une information représentative de la communication initiale à un membre de la hiérarchie de l'entreprise protégée afin qu'il valide (par signature électronique, par exemple) ou infirme le contenu de ladite communication initiale.

Ainsi, dans une entreprise utilisant le logiciel d'assistance, en fonction de l'identité d'un utilisateur dans l'entreprise, de l'identité d'un interlocuteur de cet utilisateur dans l'entreprise et/ou de la détection d'une information à protéger (par exemple, les mots clés " préjudice " , " contrat " , " engage " , " réparation " , " Euros " , " dollars " , " gratuit " ,...), le logiciel d'assistance provoque l'ajout dans un courrier électronique ou l'envoi d'un courrier électronique complémentaire à destination de l'interlocuteur ou d'un tiers, pour réduire la portée juridique de la communication entre l'utilisateur et l'interlocuteur.

Préférentiellement, l'utilisateur dans l'entreprise est averti de la conservation de l'enregistrement et un enregistrement de la communication est certifié (daté et doté d'un certificat d'intégrité) et conservé par l'entreprise comme indiqué plus haut.

En variante, le logiciel d'assistance demande une authentification de l'utilisateur et s'il n'est pas autorisé à prendre un engagement au nom de l'entreprise, le met en garde contre les dangers de la communication en cours et/ou de la transmission d'une trace de cette communication à un responsable de l'entreprise ou un conseil juridique de l'entreprise (ces opérations, biens connues de l'homme du métier, n'étant pas rappelées ici).

La figure 4 représente la mise en oeuvre de la présente invention en relation avec une signature électronique. Cette mise en oeuvre comporte des aspects de l'invention indépendants :
- la signature électronique dépend du contenu d'une pluralité de pages,
- lesdites pages sont éditées par l'utilisateur, à l'exception de la page où la signature est demandée,
- la signature électronique provoque la mémorisation en mémoire non volatile et la conservation d'informations représentatives d'une pluralité de pages,
- la détection d'une signature électronique influence l'enregistrement (format et/ou contenu), son délai de conservation, son lieu de conservation et/ou les informations qui lui sont associées (certificat d'intégrité, datation, informations complémentaires), par exemple.

En figure 4, après qu'un terminal ait été mis en fonctionnement et que le logiciel d'assistance ait été initialisé, opération 400, au cours d'un test 401, il est déterminé si une signature électronique à clé asymétrique (ce terme recouvrant aussi l'authentification à clé asymétrique) est demandée. Par exemple, une routine logicielle caractéristique de la mise en oeuvre d'une signature est détectée (détection de crypto-API ou ActivX, par exemple), ou une information reçue de la part du site et indicative d'une signature à clé asymétrique est détectée. Lorsque le résultat du test 401 est négatif, le test 401 est réitéré. Lorsque le résultat du test 401 est positif, une interface graphique invite l'utilisateur à indiquer quelles autres pages du site, en dehors de la page dans laquelle la signature électronique à clés asymétriques est demandée, sont liées à la transaction. L'utilisateur peut alors retourner sur des pages qu'il a vues pour les associer au document à signer. L'utilisateur peut aussi accepter ou décider que tout l'enregistrement de ce qu'il a vu sur le site visité serve d'annexe au document signé. Enfin, l'utilisateur peut accepter ou décider que les pages ayant un contenu légal, répertoriées par le site de protection 170, soient annexées au document signé.

Selon le type de signature électronique à clés asymétriques, ce contenu à signer est alors l'objet d'un certificat d'intégrité qui certifie la signature ou le contenu à signer ou fournit une racine pour la signature à constituer.

L'ensemble du contenu choisi par l'utilisateur ou, en variante, l'enregistrement concernant la visite du site demandant la signature, sans que l'utilisateur ne puisse influencer ce contenu, sont conservés dans un lieu choisi par l'utilisateur et un message indiquant cette conservation est transmis au site, opération 402.

Ainsi, la détection d'une signature électronique peut provoquer l'opération de mémorisation en mémoire non volatile, ou influencer l'enregistrement (format et/ou contenu), son délai de conservation, son lieu de conservation, et les informations qui lui sont associées (certificat d'intégrité, datation, informations complémentaires), par exemple.

Dans des exemples de réalisation, au cours de l'opération de mémorisation en mémoire non volatile, l'enregistrement est représentatif d'une pluralité de pages. Ainsi, ce n'est pas seulement un bon de commande, une déclaration administrative ou un document tenant sur une seule page qui est conservé mais une pluralité de pages, par exemple une pluralité de pages de ladite succession ou une pluralité de pages comportant des pages à contenu légat provenant dudit site distant.

Préférentiellement, au cours de l'opération de mémorisation en mémoire non volatile, l'enregistrement est représentatif d'au moins une page où est demandée ladite signature électronique. Selon une variante, au cours de l'opération de mémorisation en mémoire non volatile, l'enregistrement est représentatif de chaque page visitée par l'utilisateur.

Dans des exemples de réalisation, sont prévus une opération de détermination d'un début de document contractuel et une opération de détermination de fin de document contractuel et au cours de l'opération de mémorisation en mémoire non volatile, l'enregistrement est représentatif de chaque page accédée entre le début de document et la fin de document. Ainsi, la signature peut dépendre d'un ensemble d'informations que l'utilisateur considère comme contractuel et sur lequel il souhaite que porte la signature, sachant qu'il lui suffit alors, lorsqu'il atteint le document à signer de visiter ou revisiter les pages qu'il considère comme comportant des informations qui ont motivé son consentement à signer puis de revenir sur le document à signer, pour associer ces pages à ce document. En variante, l'utilisation du menu du logiciel d'assistance permet à l'utilisateur de sélectionner les pages à associer au document à signer, une option " signer la page affichée " étant alors prévue dans ce menu.

Dans des exemples de réalisation, il est prévu une opération d'association d'un certificat d'intégrité à l'enregistrement, ledit certificat d'intégrité étant mémorisé en association avec l'enregistrement.

Dans des exemples de réalisation, un procédé de mémorisation de données de transaction, comporte :
- une opération de communication, par l'intermédiaire d'un réseau de communication, au cours de laquelle des informations sont reçues par un terminal en provenance dudit réseau,
- une opération de mémorisation en mémoire non volatile de données représentative d'informations provenant dudit réseau de communication au cours de ladite opération de communication,
- au cours de ladite opération de mémorisation en mémoire non volatile, une opération de détection de transaction, en fonction des informations reçues dudit réseau par ledit terminal au cours de ladite opération de communication, et
- une opération de conservation desdites données mémorisées dépendant du résultat de ladite opération de détection.

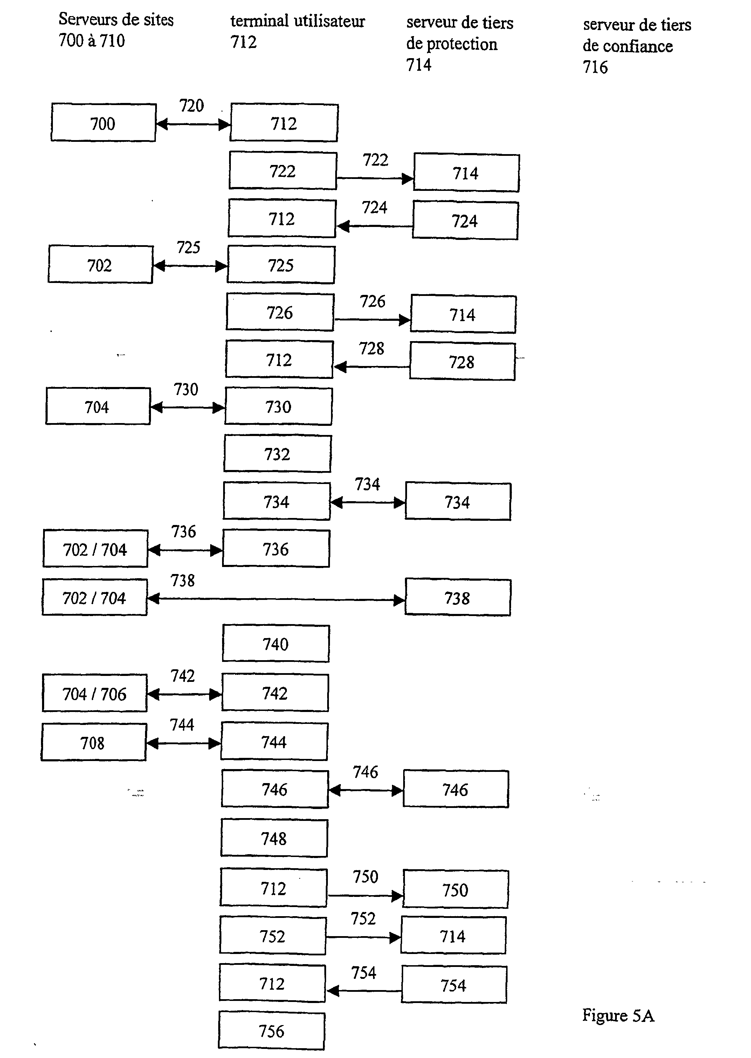

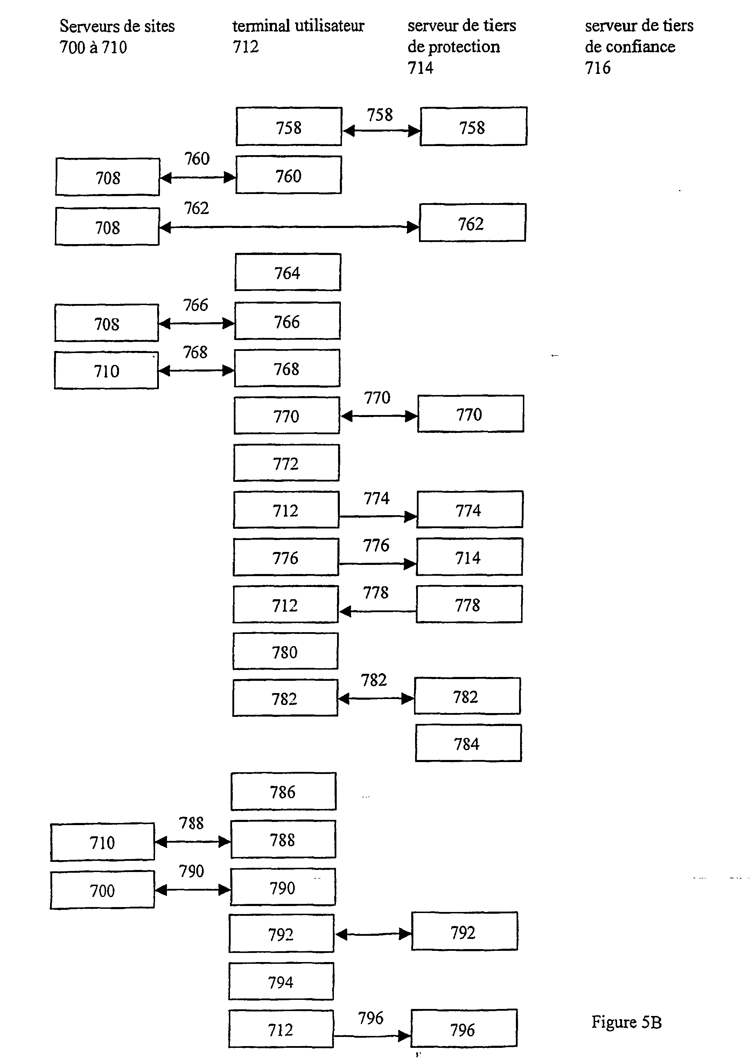

La figure 5 représente des communications d'information entre différents terminaux ou serveurs informatiques, pour la mise en oeuvre d'un exemple de réalisation de la présente invention.

En première ligne ; en haut de la figure 5 sont donnés les noms des fonctions supportées par ces terminaux ou serveurs informatiques. Sont représentés, dans l'ordre, de gauche à droite :
- les serveurs de sites 700 à710,
- un terminal utilisateur 712,
- un serveur de tiers de protection 714, et
- un serveur de tiers de confiance 716.

Le logiciel d'assistance est installé en permanence sur le terminal 712 (il est lancé automatiquement au cours du démarrage du terminal de l'utilisateur) et lit les adresses ( " URL " ) des sites visités, par exemple en les lisant sur chaque navigateur actif. Lorsqu'un navigateur est actif, le logiciel d'assistance surveille les transactions comme indiqué en regard des figures 1 à 4, par exemple en surveillant les informations à protéger (par exemple numéro de carte de crédit et mots clés) et/ou les routines et logiciels utilisés (par exemple, logiciel de conservation de données de transaction connu sou le nom de " wallet " , pilote de lecteur de carte à mémoire ou crypto-API utilisée lors d'une opération d'authentification ou de signature électronique)et/ou les contenus, le nom de domaine ou l'adresse de pages reçues des sites par le terminal 712. La mémorisation effectuée ci-dessous est à la fois comprimée, en particulier lorsqu'elle concerne une succession d'images de l'écran d'un terminal et encryptée (ou chiffrée). Pour la compression d'images, il est préférentiel de réduire le nombre de couleurs restituées et le nombre de saisies d'écran mémorisées (par exemple une à deux par seconde).

Au cours d'une communication 720, le terminal utilisateur 712 ouvre une session de communication avec te serveur de site 700. Au cours d'une opération 722, le logiciel d'assistance commence une mise en mémoire dans un fichier dit " de transaction " , d'informations relatives à la session de communication, par exemple, le stockage des pages reçues par le terminal 712 de la part du site 700, ou un fichier d'images compressées de ce qui apparaît à l'écran du terminal utilisateur 712 tant que le navigateur permettant l'accès au site 700 est actif, et interroge le serveur de tiers de protection 714 par une requête identifiant le site 700. A cet effet, le logiciel d'assistance surveille la fenêtre active et suspend la mémorisation du fichier de transaction du fichier de transaction lorsque la fenêtre active n'est pas celle d'un navigateur. Au cours d'une opération 724, le serveur de tiers de protection 714, dont on admet ici qu'il conserve des données relatives au site 700 dans une base de données mise à jour par un robot de recherche de contenu et/ou par inspection manuelle, retourne un fichier de données relatives au site 700. Ce fichier comporte au moins des informations permettant la détection d'une transaction ou d'une préparation d'une transaction sur le site 700. Dans un mode de réalisation exemplaire, le fichier transmis par le serveur 714 sur requête (identifiant le site visité par exemple par son nom de domaine) du terminal 712 comporte au moins l'une des informations suivantes :
- une adresse d'au moins une page de panier du site 700 qui est affichée lorsqu'on sélectionne un produit ou service (utilisation d'un panier, en anglais " cart " ou " shopping cart " ),
- une adresse d'au moins une page de commande, page du site 700 rencontrée lorsque l'on procède à un achat ou une commande (en anglais " checkout " ou " one-click " ),
- une adresse d'au moins une page du site où l'on peut effectuer un paiement, par exemple en donnant un identifiant d'un moyen de paiement (par exemple un numéro de carte de crédit),
- une adresse ou un nom de domaine d'au moins une page d'un site de paiement, par exemple site bancaire, sur lequel renvoie le site 700 lorsque l'on désire payer,
- une adresse ou un nom de domaine d'au moins une page que l'on atteint lorsque l'on désire effectuer une signature ou une authentification de l'acheteur, et
- un mot clé indicatif de transaction sur le site 700 ou un type de transaction sur le site 700 permettant au terminal 712 d'identifier de tels mots clés.

Dans le mode de réalisation exemplaire illustré en figure 5, le fichier transmis par le serveur 714 comporte, en outre une adresse ou un nom de domaine d'au moins un serveur ou un site sur lequel la transaction peut se poursuivre (par exemple en cas de demande de crédit, lorsque le site 700 utilise plusieurs serveurs ou noms de domaine, ou lorsque le site 700 est lié à une galerie marchande dans laquelle l'acheteur peut faire des transactions multi-sites), si un tel site existe.

Les informations reçues de la part du site de tiers de protection 714 sont mises en mémoire par le terminal 712 dans un fichier dit " commercial " qui est daté.

Au cours d'une opération 725, le terminal utilisateur 712 termine la session de communication avec le site 700 sans qu'aucune transaction ou sélection de produit ou service n'ait été détectée et ouvre une session de communication avec un site 702 qui n'est pas identifié dans le fichier commercial comme un site sur lequel une transaction entamée sur le site 700 peut se poursuivre. Le terminal 712 détruit le fichier de transaction concernant le site 700 mais conserve le fichier commercial concernant le site 700. En variante, le logiciel d'assistance conserve le fichier de transaction pendant une durée dépendant de l'espace mémoire disponible pour les fichiers de transaction, jusqu'à ce que la quantité de mémoire disponible soit inférieure à une valeur seuil et que le fichier de transaction en question soit le plus vieux fichier de transaction ne concernant pas une transaction qui soit conservé par le terminal 712.

Au cours d'une opération 726, le logiciel d'assistance commence une mise en mémoire dans un fichier dit " de transaction " , d'informations relatives à la session de communication avec le site 702, comme indiqué ci-dessus pour l'opération 722, et interroge le serveur de tiers de protection 714 par une requête identifiant le site 702. Au cours d'une opération 728, le serveur de tiers de protection 714, dont on admet ici qu'il conserve des données relatives au site 702, retourne un fichier comme indiqué au cours de l'opération 724 et tout ou partie de cette information est insérée dans un fichier commercial daté.

On admet ici que le site 702 utilise plusieurs serveurs, plusieurs noms de domaine ou qu'une transaction peut se poursuivre sur plusieurs sites qui sont identifiés dans le fichier commercial correspondant au site 702. Par exemple, la transaction se poursuit sur un serveur ou site704. Dans ce cas, au cours d'une opération 730, le terminal 712 reconnaît les adresses ou noms de domaine concernés, n'arrête pas la constitution du fichier de transaction relatif au site 702, mais, au contraire, le complète pendant la visite du site 704.

On admet ici que l'utilisateur du terminal 712 décide d'effectuer ou de préparer une transaction sur le site 704, par exemple en sélectionnant un produit et en le mettant dans le panier ou en passant une commande.

Au cours d'une opération 732, le terminal 712 détecte alors la transaction, soit lorsque l'une des adresses, l'un des noms de domaines ou un mot clé dans la description de la page (par exemple en format HTML ou XML) est identifié comme indicateur de transaction en comparaison avec le contenu du fichier commercial correspondant au site 702 ou par comparaison avec des mots clés indicatifs de transaction prédéterminés conservés par le terminal 712, soit lorsque le logiciel d'assistance détecte des informations à protéger (par exemple saisies au clavier du terminal 712) qui sont des données indicatives de transaction (par exemple numéro de carte de crédit) prédéterminées (par exemple fournies lors de l'initialisation du logiciel d'assistance par l'utilisateur et conservées en mémoire sous forme cryptée), soit encore lorsqu'une routine ou un logiciel mis en oeuvre est indicatif d'une transaction (par exemple, logiciel de conservation de données de transaction " wallet " , pilote de lecteur de carte à mémoire ou crypto-API utilisée lors d'une opération d'authentification ou de signature électronique à clés asymétriques).

On observe que pour la détection de mots clés dans la description de la page, on peut soit scruter les informations transitant sur un port de communication du terminal, ou en relation avec le logiciel de navigation, soit utiliser une routine de lecture de la description de la page et rechercher les mots clés dans cette description.

Au cours d'une opération 734, le terminal 712 effectue alors une nouvelle requête au serveur de tiers de protection 714, en lui donnant un identifiant du site 702 ou du site 704 pour recevoir, en retour, des informations qui peuvent être utiles au fonctionnement du logiciel d'assistance ou à l'utilisateur du terminal 712. Par exemple, le fichier transmis par le serveur 714 comporte :
- au moins une adresse de page à contenu légal du site 700 (conditions générales de vente),
- une date et heure certifiée,
- d'autres informations concernant le site 702 et/ou 704 (taux de satisfaction des précédents utilisateurs, délais de réponse aux appels téléphoniques ou aux courriers électroniques, pays ou état de localisation, adresse e-mail du service consommateur, sites concurrents, type de transaction...), des informations sur les lois de protection du consommateur applicables lors de transaction sur le site 702 et/ou 704, et des informations indépendantes du site 702 et/ou 704 (conseils pour les acheteurs en ligne, accès à au moins un moteur de recherche de meilleur prix, publicités, accès à des sites de protection du consommateur).

Au cours d'une opération 736, le logiciel d'assistance télécharge chaque page à contenu légat du site 702et/ou du site 704 et l'intègre au fichier de transaction, par exemple sous leur format de description d'origine, par exemple HTML ou XML). En variante, au cours d'une opération 738, le serveur 714télécharge chaque page à contenu légal du site 702 et/ou du site 704 et l'associe à la requête reçue du terminal utilisateur 712 avec, par exemple, la date, l'heure, et un identifiant de l'utilisateur.

Optionnellement, au cours d'une opération 740, le logiciel d'assistance affiche sur l'écran du terminal 712 tout ou partie des informations pouvant être utiles à l'utilisateur, y compris sous forme de liens donnant accès à des pages conservées par le serveur 714 ou des boutons permettant d'accéder à des détails (accès aux lois applicables, à la pratique du site, aux conseils, et aux offres de service).

Au cours d'une opération 742, l'utilisateur poursuit la transaction, par exemple, en payant en ligne, sur le site 704 ou sur un site de paiement 706 identifié dans le fichier commercial. La constitution du fichier de transaction se poursuit pendant le paiement. Au cours d'une opération 744, l'utilisateur finit la transaction en accédant à un site 708 qui n'est pas identifié dans le fichier commercial correspondant à l'un des sites 702 ou 704.

Au cours d'une opération 746, le logiciel d'assistance associe au fichier de transaction intégrant chaque page à contenu légal du site 702 ou du site 704, une date et une heure certifiée (reçue du serveur 714 ou objet d'une nouvelle requête à ce serveur).

Au cours d'une opération 748, le logiciel d'assistance détermine un certificat d'intégrité (condensât ou " hash " , somme de vérification ou " checksum " , CRC ou code de redondance) du fichier de transaction, ce certificat permettant la détection de toute modification ultérieure de ce fichier de transaction et conserve ce certificat d'intégrité avec le fichier de transaction et la date et l'heure certifiée, le tout étant conjointement appelées " contrat digitat " .

Au cours d'une opération750, le logiciel d'assistance transmet le certificat d'intégrité au serveur de tiers de protection 714 qui le conserve avec une date certifiée (obtenue, par exemple, par requête sur trois sites fournissant de telles dates) et, éventuellement, un identifiant de site concerné (702 et/ou 704).

On admet ici que le site 708 est un site sur lequel on peut effectuer une déclaration administrative, par exempte sociale ou fiscale. Au cours d'une opération 752, le logiciel d'assistance commence une mise en mémoire dans un fichier dit " de transaction " , comme indiqué ci-dessus et interroge le serveur de tiers de protection 714 par une requête identifiant le site 708. Au cours d'une opération754, le serveur de tiers de protection714, dont on admet ici qu'il conserve des données sur le site 708 dans une base de données mise à jour par un robot de recherche de contenu et/ou par inspection manuelle, retourne un fichier de données.

Dans le cas d'un site sur lequel peut être effectuée une déclaration administrative, le fichier dit " commercial " comporte au moins des informations permettant la détection d'une déclaration ou d'une préparation d'une déclaration. Dans un mode de réalisation exemplaire, le fichier transmis par le serveur 714 sur requête (identifiant le site visité par exemple par son nom de domaine) du terminal 712 comporte au moins l'une des informations suivantes :
- une adresse d'au moins une page de déclaration, sur laquelle l'utilisateur peut reporter des éléments à déclarer,
- une adresse d'au moins une page du site où l'on peut effectuer un paiement, par exemple en donnant un identifiant d'un moyen de paiement (par exemple un numéro de carte de crédit ou un accord pour un paiement automatique),
- une adresse ou un nom de domaine d'au moins une page d'un site de paiement, par exemple site bancaire, sur lequel renvoie le site 708 lorsque l'on désire payer,
- une adresse ou un nom de domaine d'au moins une page que l'on atteint lorsque l'on désire effectuer une signature ou une authentification de l'acheteur,
- une adresse ou un nom de domaine d'au moins un serveur ou un site sur lequel la déclaration peut se poursuivre (par exemple en cas de demande de renseignement, lorsque le site 700 utilise plusieurs serveurs ou noms de domaine.), et
- des mots clés indicatifs de déclaration sur le site 700.

En outre, le fichier transmis par le serveur 714 peut comporter au moins une adresse de page d'information du site 708 (par exemple la notice administrative) et une date et heure certifiée et un nom de domaine ou adresse de page d'un site sur lequel peut se poursuivre la déclaration où peut se trouver de l'information relative à la déclaration (lois et journaux officiels, par exemple).

Le fichier transmis par le serveur 714 peut aussi comporter d'autres informations concernant le site 708 (délais de réponse aux appels téléphoniques ou aux courriers électroniques, adresse e-mail pour poser des questions ou faire une réclamation), des informations sur les lois de protection du déclarant applicables lors de déclaration sur le site 708, et des informations indépendantes du site 708 (conseils pour déclarer en ligne, publicités, accès à des sites de protection du déclarant).

Les informations reçues de la part du site de tiers de protection 714 sont mises en mémoire par le terminal 712 dans un fichier dit " commercial " qui est daté.

On admet ici que l'utilisateur du terminal 712 décide d'effectuer ou de préparer une déclaration sur le site 708.

Au cours d'une opération 756, le terminal 712 détecte alors la déclaration, soit lorsque l'une des adresses, l'un des noms de domaines ou un mot clé dans la description de la page (par exemple en format HTML ou XML) est identifié comme indicateur de déclaration en comparaison avec le contenu du fichier commercial correspondant au site 708 ou par comparaison avec des mots clés indicatifs de déclaration prédéterminés conservés par le terminal 712, soit lorsque le logiciel d'assistance détecte des informations à protéger (par exemple saisies au clavier du terminal 712) qui sont des données indicatives de déclaration (par exemple numéro de carte de crédit, nom ou adresse) prédéterminées (par exemple fournies lors de l'initialisation du logiciel d'assistance par l'utilisateur et conservées en mémoire sous forme cryptée), soit encore lorsqu'une routine ou un logiciel mis en oeuvre est indicatif d'une déclaration (par exemple, logiciel de conservation de données de transaction " wallet " , pilote de lecteur de carte à mémoire ou crypto-API utilisée lors d'une opération d'authentification ou de signature électronique à clés asymétriques).

Au cours d'une opération 758, le terminal 712 effectue alors une nouvelle requête au serveur de tiers de protection 714, en lui donnant un identifiant du site 708 pour recevoir, en retour, des informations qui peuvent être utiles au fonctionnement du logiciel d'assistance ou à l'utilisateur du terminal 712. Par exemple, le fichier transmis par le serveur 714 comporte :
- au moins une adresse de page à contenu légal du site 708 (notice administrative),
- une date et heure certifiée,
- d'autres informations concernant le site 708 (délais de réponse aux appels téléphoniques ou aux courriers électroniques, adresse e-mail pour obtenir de l'information), des informations sur les lois de protection du déclarant applicables à la déclaration en cours sur le site 708, et des informations indépendantes du site 708 (conseils pour les déclarants en ligne, publicités, accès à des sites de protection du déclarant).

Au cours d'une opération 760, le logiciel d'assistance télécharge chaque page de la notice administrative du site 708 et l'intègre au fichier de transaction. En variante, au cours d'une opération 762, le serveur 714télécharge chaque page de la notice administrative du site 708 et l'associe à la requête reçue du terminal utilisateur 714 avec, par exemple, la date, l'heure et un identifiant de l'utilisateur.

Optionnellement, au cours d'une opération 764, le logiciel d'assistance affiche sur l'écran du terminal 712 tout ou partie des informations pouvant être utiles à l'utilisateur, y compris sous forme de liens donnant accès à des pages conservées par le serveur 714 ou des boutons permettant d'accéder à des détails (accès aux lois applicables, à la pratique du site, aux conseils, et aux offres de service).

Au cours d'une opération 766, l'utilisateur poursuit la transaction, par exemple, en payant en ligne, sur le site 708 ou sur un site de paiement identifié dans le fichier commercial. Au cours d'une opération 768, l'utilisateur finit la transaction en accédant à un site 710, site qui n'est pas identifié dans le fichier commercial correspondant au site 708.

Au cours d'une opération 770, le logiciel d'assistance associe au fichier de transaction éventuellement complété par chaque page de notice administrative du site 708, une date et une heure certifiée (reçue du serveur 714 ou objet d'une nouvelle requête à ce serveur).

Au cours d'une opération 772, le logiciel d'assistance détermine un certificat d'intégrité (par exemple un condensât, un code de redondance ou une somme de vérification) du fichier de transaction, ce certificat permettant de détecter toute modification ultérieure du fichier de transaction, et conserve ce certificat avec le fichier de transaction, la date et l'heure, conjointement appelées " contrat digital " .

Au cours d'une opération 774, le logiciel d'assistance transmet le certificat d'intégrité au serveur de tiers de protection 714 qui le conserve avec une date certifiée (obtenue, par exemple, par requête sur trois sites fournissant de telles dates) et, éventuellement, un identifiant de site 708.

Au cours d'une opération 776, le logiciel d'assistance commence une mise en mémoire dans un fichier dit " de transaction " , d'informations relatives à la session de communication avec le site 710, comme indiqué ci-dessus, et interroge le serveur de tiers de protection 714 par une requête identifiant le site 710. Au cours d'une opération 778, le serveur de tiers de protection 714, dont on admet ici qu'il ne conserve pas de donnée relative au site 710, retourne un fichier de données susceptibles de permettre la détection d'une transaction.

Dans un mode de réalisation exemplaire, le fichier transmis par le serveur 714 sur requête (identifiant le site visité par exemple par son nom de domaine) du terminal 712 comporte au moins l'une des informations suivantes :
- une adresse de pages ou un nom de domaine d'un site sur lequel une transaction entamée sur le site 710 est susceptible de se poursuivre (par exemple site bancaire recevant les paiements de plusieurs sites marchand),
- un mot clé susceptible d'identifier une transaction.

Tout ou partie de cette information est insérée dans un fichier dit " bancaire " daté. Par exemple, les fichiers de pages ou noms de domaines concernent les principaux organismes bancaires assurant des paiements en ligne dans le pays ou la région du site 710, ce pays ou cette région étant déterminé soit à partir de la terminaison du nom de domaine, soit à partir de l'interrogation d'un serveur de noms de domaine " DNS " .

On admet ici que l'utilisateur du terminal 712 décide d'effectuer ou de préparer une transaction sur le site 710, par exemple en sélectionnant un produit et en le mettant dans le panier ou en passant une commande.

Au cours d'une opération 780, le terminal 712 détecte alors la transaction, soit lorsque l'une des adresses, l'un des noms de domaines ou un mot clé dans la description de la page (par exemple en format HTML ou XML) est identifié comme indicateur de transaction en comparaison avec le contenu du fichier bancaire correspondant au site 710 ou par comparaison avec des mots clés indicatifs de transaction prédéterminés conservés par le terminal 712, soit lorsque le logiciel d'assistance détecte des informations à protéger (par exemple saisies au clavier du terminal 712) qui sont des données indicatives de transaction (par exemple numéro de carte de crédit) prédéterminées (par exemple fournies lors de l'initialisation du logiciel d'assistance par l'utilisateur et conservées en mémoire sous forme cryptée), soit encore lorsqu'une routine ou un logiciel mis en oeuvre est indicatif d'une transaction (par exemple, logiciel de conservation de données de transaction " wallet " , pilote de lecteur de carte à mémoire ou crypto-API utilisée lors d'une opération d'authentification ou de signature électronique à clés asymétriques).

En variante, une transaction est détectée lorsqu'un protocole de communication sécurisé est mis en oeuvre, par exemple l'encryption SSL indiquée par les adresses de page https ou lorsque successivement ce protocole est mis en oeuvre puis l'un des critères indiqués dans l'opération 780, est respecté.

Au cours d'une opération 782, le terminal 712 effectue alors une nouvelle requête au serveur de tiers de protection 714, en lui donnant un identifiant du site 710 pour recevoir, en retour, des informations qui peuvent être utiles au fonctionnement du logiciel d'assistance ou à l'utilisateur du terminal 712. Par exemple, le fichier transmis par le serveur 714:
- une date et heure certifiée,
- d'autres informations sur les lois de protection du consommateur applicables lors de transaction sur le site 710, et des informations indépendantes du site 710 (conseils pour les acheteurs en ligne, accès à au moins un moteur de recherche de meilleur prix, publicités, accès à des sites de protection du consommateur).

En variante, au cours d'une opération 784, le serveur 714 conserve la requête reçue du terminal utilisateur 712 avec, par exemple, la date, l'heure et un identifiant de l'utilisateur.

Optionnellement, au cours d'une opération 786, le logiciel d'assistance affiche sur l'écran du terminal 712 tout ou partie des informations pouvant être utiles à l'utilisateur, y compris sous forme de liens donnant accès à des pages conservées par le serveur 714 ou des boutons permettant d'accéder à des détails (accès aux lois applicables, à la pratique du site, aux conseils, et aux offres de service).

Au cours d'une opération 788, l'utilisateur poursuit la transaction, par exemple, en payant en ligne, sur le site 710. Au cours d'une opération 790, l'utilisateur finit la transaction en retournant sur le site 700.

Au cours d'une opération 792, le logiciel d'assistance intègre au fichier de transaction, une date et une heure certifiée (reçue du serveur 714 ou objet d'une nouvelle requête à ce serveur).

Au cours d'une opération 794, le logiciel d'assistance détermine un certificat d'intégrité (par exemple un condensât, un code de redondance ou une somme de vérification) du fichier de transaction, ce certificat permettant de détecter toute modification ultérieure du fichier de transaction, et conserve ce certificat avec le fichier de transaction, la date et l'heure, conjointement appelées " contrat digital " .

Au cours d'une opération 796, le logiciel d'assistance transmet le certificat d'intégrité au serveur de tiers de protection 714 qui le conserve avec une date certifiée (obtenue, par exemple, par requête sur trois sites fournissant de telles dates) et, éventuellement, un identifiant de site 710.

On observe que lors de la nouvelle communication avec le site 700, la première requête au serveur 714 est inhibée par le terminal 712 pendant une durée prédéterminée ou jusqu'à une date prédéterminée suivant le premier téléchargement du fichier commercial correspondant au site 700.

Par exemple, pendant une semaine ou jusqu'au vendredi suivant la première visite du site 700, les visites du site 700 ne donnent pas lieu à de nouvelles requêtes de la part du terminal 712, sauf si une transaction est détectée.

L'utilisateur peut programmer le logiciel d'assistance pour qu'à la fin de chaque transaction, le logiciel d'assistance propose à l'utilisateur de transmettre une copie du contrat digital au serveur de tiers de confiance 716 ou effectue automatiquement cette transmission.

On observe que le fonctionnement du logiciel d'assistance décrit ci-dessus en regard de la figure 5 est entièrement automatique, la seule intervention de l'utilisateur se limitant à choisir sur quels sites il souhaite effectuer une visite, sélectionner un produit ou un service, passer commande, effectuer une déclaration administrative...

On observe qu'il n'est pas indispensable qu'un certificat d'intégrité du contrat digital soit conservé par le serveur de tiers de protection 714 pour que toute modification ultérieure de ce contrat soit détectable. Par exemple, en variante, ce certificat d'intégrité est chiffré au niveau du serveur 714 par une clé publique conforme à l'infrastructure à clés publiques PKI, ou par un numéro de transaction universel unique pour chaque transaction, et le résultat est associé au contrat digital conservé par le terminal 712.

Dans des exemples de réalisation, lorsqu'une transaction en ligne est détectée par exemple comme indique ci-dessus, ou à la sortie du site sur lequel une transaction a été détectée ou de tout site associé, au moins un délai de rappel est déterminé, par exemple en fonction du type de transaction effectuée sur le site et des lois applicables à la transaction, et, pour chaque rappel, lorsque ce délai est expiré, un message d'interrogation est adressé à l'utilisateur et affiché sur son terminal, par exemple sous forme de fenêtre ouverte sur l'écran de son terminal et l'utilisateur effectue un choix de réponse à l'interrogation qui est automatiquement traité en fonction de la réponse, au moins une des réponses provoquant la transmission d'un message représentatif de ladite réponse à un site, par exemple sous forme d'accès à une page de ce site ou d'e-mail. Selon des caractéristiques particulières, au moins l'une des réponses provoque, immédiatement ou après d'autres réponses de l'utilisateur à d'autres questions automatiquement posées par le terminal 712 ou le site 714, la transmission de l'enregistrement correspondant à la transaction détectée audit site recevant un message représentatif de la réponse.

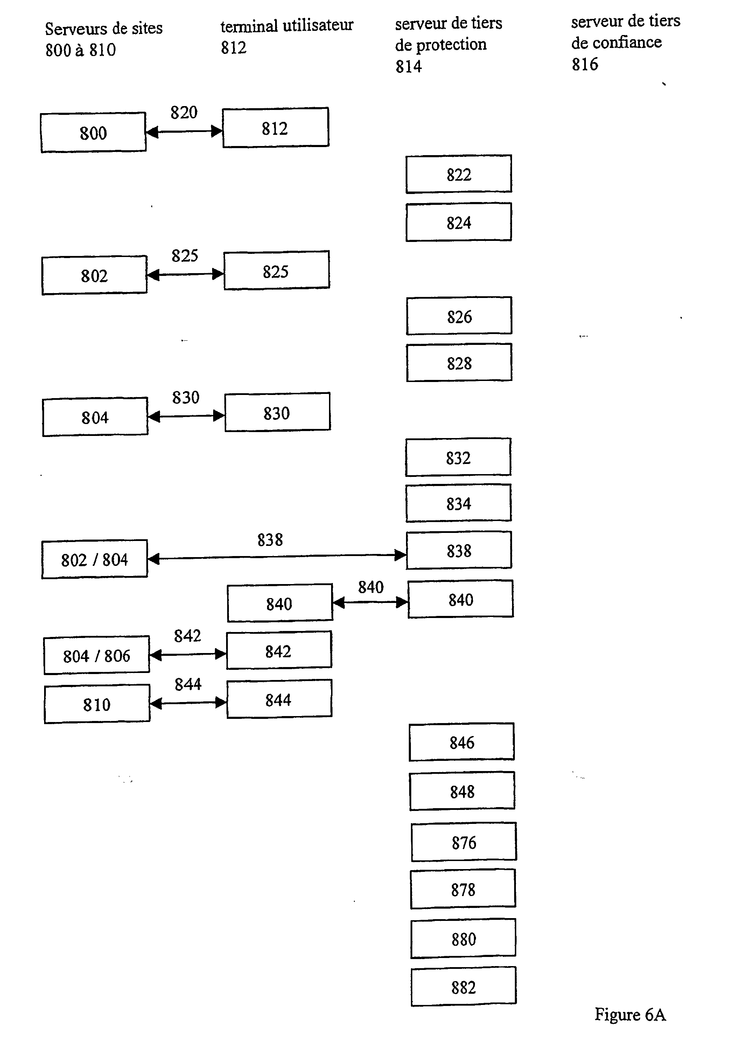

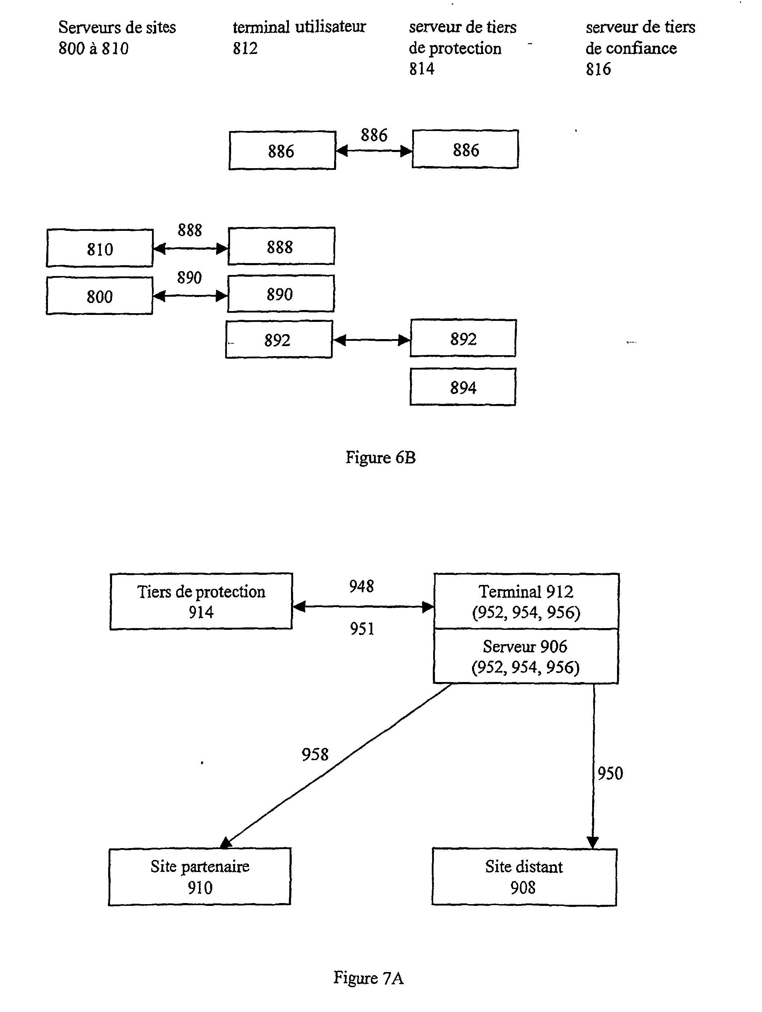

La figure 6 représente des communications d'information entre différents terminaux ou serveurs informatiques, pour la mise en oeuvre d'un exemple de réalisation de la présente invention.

En première ligne, en haut de la figure 6 sont donnés les noms des fonctions supportées par ces terminaux ou serveurs informatiques. Sont représentés, dans l'ordre, de gauche à:
- les serveurs de sites 800 à 810,
- un terminal utilisateur 812,
- un portail et serveur de tiers de protection 814, et
- un serveur de tiers de confiance 816.

Le terminal utilisateur 812 est ici soit un ordinateur, soit un terminal doté de peu de mémoire, par comparaison avec un ordinateur. C'est par exemple un téléphone mobile ou un assistant numérique. Le portail-serveur 714 sert au terminal utilisateur 812 à accéder à des sites informatiques distants.

Une partie du logiciel d'assistance est installé en permanence sur le portail-serveur 814 et lit les adresses ( " URL " ) des sites visités, par exemple en les lisant sur chaque requête d'un terminal utilisateur 812. Lorsqu'une communication entre un terminal et un site est établie ; une autre partie du logiciel d'assistance surveille les informations saisies sur le terminal 812, par exemple sur un écran tactile, pour les comparer à des informations à protéger indicatives de transaction (par exemple numéro de carte de crédit), des mots clés et/ou les routines et logiciels utilisés (par exemple, logiciel de conservation de données de transaction " wallet " , pilote de lecteur de carte à mémoire ou crypto API utilisée lors d'une opération d'authentification ou de signature électronique). La mémorisation effectuée ci-dessous est à la fois comprimée, en particulier lorsqu'elle concerne une succession d'images de l'écran d'un terminal et encryptée (ou chiffrée). Pour la compression d'images, il est préférentiel de réduire le nombre de couleurs restituées et le nombre de saisies d'écran mémorisées (par exemple une à deux par seconde).

Au cours d'une communication 820, le terminal utilisateur 812 ouvre une session de communication avec le serveur de site 800. Au cours d'une opération 822, la partie du logiciel d'assistance mise en oeuvre par le portail-serveur 814 commence une mise en mémoire dans un fichier dit " de transaction " , d'informations relatives à la session de communication, comme indiqué en regard de la figure 5, opération 722, et interroge la base de données que le portail-serveur conserve, par une requête identifiant le site 800. Au cours d'une opération 824, la base de données du portail serveur 814, dont on admet ici qu'elle conserve des données relatives au site 800, en étant mise à jour par un robot de recherche de contenu et/ou par inspection manuelle, retourne un fichier de données. Ce fichier comporte au moins des informations permettant la détection d'une transaction ou d'une préparation d'une transaction. Dans un mode de réalisation exemplaire, le fichier transmis par la base de données du portail-serveur 814 sur requête interne (identifiant le site visité par exemple par son nom de domaine) comporte au moins l'une des informations suivantes :
- une adresse d'au moins une page de panier du site 800 qui est affichée lorsqu'on sélectionne un produit ou service (utilisation d'un panier, en anglais " cart " ou " shopping cart "),
- une adresse d'au moins une page de commande, page du site 800 rencontrée lorsque l'on procède à un achat ou une commande (en anglais " checkout " ou " one- click "),
- une adresse d'au moins une page du site où l'on peut effectuer un paiement, par exemple en donnant un identifiant d'un moyen de paiement (par exemple un numéro de carte de crédit),
- une adresse ou un nom de domaine d'au moins une page d'un site de paiement, par exemple site bancaire, sur lequel renvoie le site 800 lorsque l'on désire payer,
- une adresse ou un nom de domaine d'au moins une page que l'on atteint lorsque l'on désire effectuer une signature ou une authentification de l'acheteur,
- une adresse ou un nom de domaine d'au moins un serveur ou un site sur lequel la transaction peut se poursuivre (par exemple en cas de demande de crédit, lorsque le site 800 utilise plusieurs serveurs ou noms de domaine, ou lorsque le site 800 est lié à une galerie marchande dans laquelle l'acheteur peut faire des transactions multi-sites),
- un mot clé indicatif de transaction sur le site 800 ou un type de transaction sur le site 800 permettant au terminal 812 d'identifier de tels mots clés.

Dans le mode de réalisation exemplaire illustré en figure 6, le fichier transmis par la base de données comporte, en outre une adresse ou un nom de domaine d'au moins un serveur ou un site sur lequel la transaction peut se poursuivre (par exemple en cas de demande de crédit, lorsque le site 800 utilise plusieurs serveurs ou noms de domaine, ou lorsque le site 800 est lié à une galerie marchande dans laquelle l'acheteur peut faire des transactions multi-sites), si un tel site existe.

En outre, le fichier transmis par la base de données du portail-serveur 814 peut comporter au moins une adresse de page à contenu légal du site 800 (conditions générales de vente) et une date et heure certifiée.

Le fichier transmis peut aussi comporter d'autres informations concernant le site 800 (taux de satisfaction des précédents utilisateurs, délais de réponse aux appels téléphoniques ou aux courriers électroniques, pays ou état de localisation, adresse e-mail du service consommateur, sites concurrents...), des informations sur les lois de protection du consommateur applicables lors de transaction sur le site 800, et des informations indépendantes du site 800 (conseils pour les acheteurs en ligne, accès à au moins un moteur de recherche de meilleur prix, publicités, accès à des sites de protection du consommateur). Les informations reçues de la part de la base de données du portail-serveur 814 sont mises en mémoire par le portail-serveur 814 en correspondance avec un identifiant du terminal 812, dans un fichier dit " commercial " qui est daté.

Au cours d'une opération 825, le terminal utilisateur 812 termine la session de communication avec le site 800 sans qu'une transaction ou une sélection de produit ou service n'ait été détectée et ouvre une session de communication avec un site 802 qui n'est pas identifié dans le fichier commercial comme un site sur lequel une transaction entamée sur le site 800 peut se poursuivre. Le portail-serveur 814 détruit le fichier de transaction concernant le site 800.

Au cours d'une opération 826, la partie du logiciel d'assistance qui se trouve sur le portail serveur 814 commence une mise en mémoire dans un fichier dit " de transaction " , d'informations relatives à la session de communication, comme indiqué ci-dessus, et interroge la base de données du portail-serveur 814 par une requête identifiant le site 802. Au cours d'une opération 828, la base de données du portail-serveur 814, dont on admet ici qu'elle conserve des données relatives au 802, retourne un fichier comme indiqué au cours de l'opération 824 et tout ou partie de cette information est insérée dans un fichier commercial daté.

On admet ici que le site 802 utilise plusieurs serveurs, plusieurs noms de domaine ou que une transaction peut se poursuivre sur plusieurs sites qui sont identifiés dans le fichier commercial correspondant au site 802. Par exemple, la transaction se poursuit sur un serveur ou site 804. Dans ce cas, au cours d'une opération 830, la partie du logiciel d'assistance du portail-serveur 814 reconnaît les adresses ou noms de domaine concernés, n'arrête pas la constitution du fichier de transaction, mais, au contraire, la poursuit pendant la visite du site 804.

On admet ici que l'utilisateur du terminal 812 décide d'effectuer ou de préparer une transaction sur le site 804, par exemple en sélectionnant un produit et en le mettant dans le panier ou en passant une commande.

Au cours d'une opération 832, le logiciel d'assistance détecte alors la transaction, comme indiqué en regard de la figure 5, opération 732.

Au cours d'une opération 834, le portail-serveur 814 effectue alors une nouvelle requête à sa base de données, en lui donnant un identifiant du site 802 ou du site 804 pour recevoir, en retour, des informations qui peuvent être utiles au fonctionnement du logiciel d'assistance ou à l'utilisateur du terminal 812. Par exemple, le fichier transmis par la base de données peut comporter au moins une adresse de page à contenu légal du site 802et/ou 804 (conditions générales de vente), d'autres informations concernant le site 802 et/ou 804 (taux de satisfaction des précédents utilisateurs, délais de réponse aux appels téléphoniques ou aux courriers électroniques, pays ou état de localisation, adresse e-mail du service consommateur, sites concurrents...), des informations sur les lois de protection du consommateur applicables lors de transaction sur le site 802 et/ou 804, et des informations indépendantes du site 802 et/ou 804 (date et heure certifiée, conseils pour les acheteurs en ligne, accès à au moins un moteur de recherche de meilleur prix, publicités, accès à des sites de protection du consommateur).

Au cours d'une opération 836, la partie du logiciel d'assistance qui est sur le portail-serveur 814télécharge chaque page à contenu légal du site 802et/ou du site 804 et l'intègre au fichier de transaction et l'associe à la date, l'heure et/ou un identifiant de l'utilisateur ou du terminal utilisateur 812.

Optionnellement, au cours d'une opération 840, les deux parties du logiciel d'assistance concourent pour afficher sur l'écran du terminal 812 tout ou partie des informations pouvant être utiles à l'utilisateur, y compris sous forme de liens donnant accès à des pages conservées par le portail-serveur 814 ou des boutons permettant d'accéder à des détails (accès aux lois applicables, à la pratique du site, aux conseils, et aux offres de service).

Au cours d'une opération 842, l'utilisateur poursuit la transaction, par exemple, en payant en ligne, sur le site 804 ou sur un site de paiement 806 identifié dans le fichier commercial. Au cours d'une opération 844, l'utilisateur finit la transaction en accédant à un site 810 qui n'est pas identifié dans le fichier commercial correspondant à l'un des sites 802 ou 804.

Au cours d'une opération 846, la partie du logiciel d'assistance qui est sur le portail-serveur 814 associe au fichier de transaction, une date, un identifiant du site 802et/ou 804, et une heure certifiée.

Au cours d'une opération 848, le logiciel d'assistance détermine un certificat d'intégrité (condensât ou " hash " , somme de vérification ou " checksum " , CRC ou code de redondance) du fichier de transaction, ce certificat permettant la détection de toute modification ultérieure de ce fichier de transaction et conserve ce certificat d'intégrité avec le fichier de transaction et la date et l'heure certifiée, le tout étant conjointement appelées " contrat digital " .

Au cours d'une opération 876, la partie du logiciel d'assistance du portail-serveur 814 commence une mise en mémoire dans un fichier dit " de transaction " , d'informations relatives à la session de communication avec le site 810, comme indique ci-dessus, et interroge la base de données du portail-serveur 814 par une requête identifiant le site 810.

Au cours d'une opération 878, la base de données, dont on admet ici qu'elle ne conserve pas de donnée relative au site 810, retourne un fichier de données susceptibles de permettre la détection d'une transaction.

Dans un mode de réalisation exemplaire, le fichier transmis par la base de données sur requête interne (identifiant le site visité par exemple par son nom de domaine) comporte au moins l'une des informations suivantes :
- une adresse de pages ou un nom de domaine d'un site sur lequel une transaction entamée sur le site 810 est susceptible de se poursuivre (par exemple site bancaire recevant les paiements de plusieurs sites marchand),
- un mot clé susceptible d'identifier une transaction.

Tout ou partie de cette information est insérée dans un fichier dit " bancaire " daté. Par exemple, les fichiers de pages ou noms de domaines concernent les principaux organismes bancaires assurant des paiements en ligne dans le pays du site 810, ce pays étant déterminé soit à partir de la terminaison du nom de domaine, soit à partir de l'interrogation d'un serveur de noms de domaine " DNS " .

On admet ici que l'utilisateur du terminal 812 décide d'effectuer ou de préparer une transaction sur le site 810, par exemple en sélectionnant un produit et en le mettant dans le panier ou en passant une commande.

Au cours d'une opération 880, le logiciel d'assistance détecte alors la transaction comme indique ci-dessus.

En variante, une transaction est détectée lorsqu'un protocole de communication sécurisé est mis en oeuvre, par exemple l'encryption SSL indiquée par les adresses de page https ou lorsque, successivement, ce protocole est mis en oeuvre puis l'un des critères indiqués dans l'opération 880 est respecté.

Au cours d'une opération 882, le portail-serveur 814 effectue alors une nouvelle requête à sa base de données, en lui donnant un identifiant du site 810 pour recevoir, en retour, des informations qui peuvent être utiles au fonctionnement du logiciel d'assistance ou à l'utilisateur du terminal 812.

Par exemple, le fichier transmis par le serveur 814 peut comporter des informations concernant les lois de protection du consommateur applicables lors de transaction sur le site 810, et des informations indépendantes du site 810 (date et heure certifiée, conseils pour les acheteurs en ligne, accès à au moins un moteur de recherche de meilleur prix, publicités, accès à des sites de protection du consommateur).

Optionnellement, au cours d'une opération 886, les deux parties du logiciel d'assistance concourent pour afficher sur l'écran du terminal 812 tout ou partie des informations pouvant être utiles à l'utilisateur, y compris sous forme de liens donnant accès à des pages conservées par le portail-serveur 814 ou des boutons permettant d'accéder à des détails (accès aux lois applicables, à la pratique du site, aux conseils, et aux offres de service).

Au cours d'une opération 888, l'utilisateur poursuit la transaction, par exemple, en payant en ligne, sur le site 810 ou sur un site indiqué par la base de données en réponse à la première requête.

Au cours d'une opération 890, l'utilisateur finit la transaction en retournant sur le site 800.

Au cours d'une opération 892, le logiciel d'assistance associe au fichier de transaction une date et une heure certifiée (objet d'une requête à des serveurs spécialisés).

Au cours d'une opération 894, le logiciel d'assistance détermine un certificat d'intégrité du fichier de transaction telle que toute modification ultérieure de ce fichier soit détectable, et conserve ce certificat d'intégrité sur le portail-serveur 814, avec le fichier de transaction et les données associées, conjointement appelées " contrat digital " .

L'utilisateur peut programmer le logiciel d'assistance pour qu'à la fin de chaque transaction détectée, le logiciel d'assistance soit propose à l'utilisateur de transmettre une copie du contrat digital au serveur de tiers de confiance 816 soit effectue automatiquement cette transmission.

On observe que le fonctionnement du logiciel d'assistance décrit ci-dessus en regard de la figure 6 est entièrement automatique, la seule intervention de l'utilisateur se limitant à choisir sur quels sites il souhaite effectuer une visite, sélectionner un produit ou un service, passer commande, effectuer une déclaration administrative...

Bien que la description présente principalement des interactions en réseau sous la forme de visite de pages de sites, la présente invention s'applique aussi bien aux transactions concluent par téléphonie sur Internet. Par exemple, te déclenchement d'un logiciel ou d'une routine de communication téléphonique ou la détection d'une page de site permettant de déclencher cette communication téléphonique peut servir à détecter une transaction, l'enregistrement comportant alors des informations représentatives de la communication téléphonique, par exemple un fichier son.

De même, l'enregistrement peut, en variante, contenir des fichiers représentatifs de sons lorsque le site distant en transmet, par exemple dans la description des pages.

On observe que l'homme du métier sait obtenir l'adresse et le nom de domaine d'une page visitée soit en l'obtenant par le logiciel de navigation, soit en scrutant les informations circulant sur le port 443 ou le port 80 (port " com " ), soit encore en mettant en mettant en oeuvre un logiciel connu sous le nom de " proxy ".

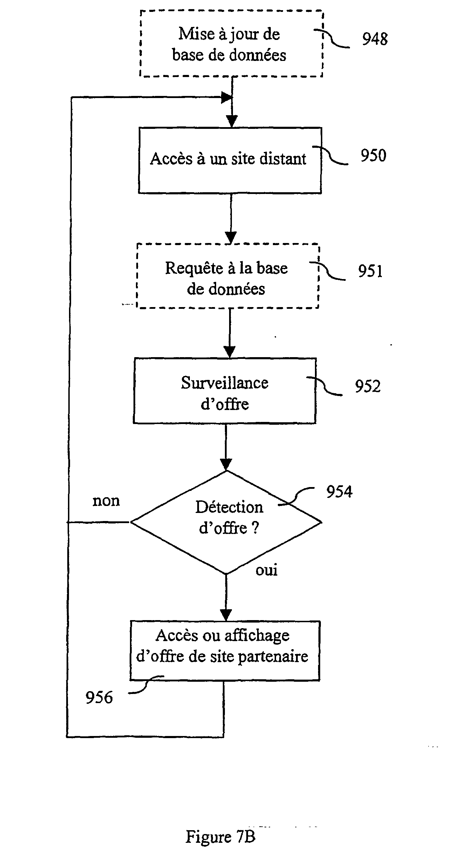

Dans un exemple de réalisation illustré en figures 7 (en schéma relation en figure 7A et en organigramme en figure 7B) vise un procédé de fourniture d'offre contextuel comporte :
- une opération de communication entre un terminal utilisateur et un site distant,
- une opération de détection sur au moins une page dudit site distant d'au moins une des informations suivantes :
   o une adresse de page visitée dudit site distant,
   o un nom de domaine dudit site distant,
   o un mot clé
- une opération de recherche dans une base de données, d'au moins une adresse de page ou d'un nom de domaine d'un site tiers dit " partenaire " , indépendant dudit site distant, et
- une opération d'affichage d'au moins un lien vers ladite adresse de page de site tiers ou vers le nom de domaine dudit site tiers.

D'autres avantages, buts et caractéristiques d'exemples de réalisation de la présente invention ressortiront de la description faite en regard de la figure 7.

Dans un mode de réalisation, un site tiers de protection 914 conserve, dans une base de données de moteur de recherche d'offres, des adresses de page ou des noms de domaine de site partenaire 910 et, pour chaque adresse ou pour nom de domaine de site partenaires, l'une au moins des informations suivantes :
- au moins une adresse de page ou un nom de domaine d'un site concurrent 908 dudit site partenaire 910,et/ou
- un mot clé à surveiller dans le contenu des pages de site distants 908 visités par l'utilisateur, visité effectuée par l'intermédiaire du terminal 912.

Préférentiellement, la base de données du moteur de recherche d'offres contient aussi, pour chaque site partenaire 910 ou pour chaque adresse de page du site partenaire 910,l'une au moins des informations suivantes :
- un prix d'un produit ou service vendu sur ledit site 910 ou ladite page du site 910, respectivement, et,
- préférentiellement, une caractéristique dudit produit ou service (par exemple référence, neuf, occasion, reconditionné, par lots, offre réservée à certains clients, disponibilité).

Dans le mode de réalisation illustré en figure 7, le logiciel d'assistance, qui peut être installé sur le terminal utilisateur 912 ou sur un serveur 906 auquel le terminal 912 peut accéder pour atteindre des sites distants 908, opération 950, surveille les noms ou adresses de page ou mots clés sur les sites distants visités 908, qui ne sont pas nécessairement des sites partenaires 910 mais qui sont référencés en regard des noms de domaine ou adresse de page d'au moins un site partenaire 910 dans la base de données du moteur de recherche, en procédant, au cours d'une opération 952, à une surveillance effectuée comme expliqué en regard des figures 1 à 6, par exemple en regard de la figure 732. Par exemple dès que le terminal 100 reçoit une page relative à un nom de domaine surveillé, relative à une adresse de page surveillée ou comportant un mot clé surveillé, le logiciel d'assistance détecte, au cours d'une opération 954, la possibilité de faire une offre de site partenaire 910, sous la forme d'une détection d'une offre du site distant 908.

Lorsque la possibilité de faire une offre de site partenaire est déterminée au cours de l'opération 954, au cours de l'opération 956, le logiciel d'assistance ouvre ou donne accès à une fenêtre sur l'écran du terminal 912 pour y afficher, pour au moins un nom de domaine de site partenaire 910 et chaque page de site partenaire 910 qui, dans la base de données de moteur de recherche d'offres, est associé à la page visité du site distant 908, au moins l'une des informations suivantes :
- un lien vers ledit site partenaire 910,
- un lien vers la page dudit site partenaire 910,
- le prix offert par le site partenaire pour chaque produit ou service associé au nom de domaine ou à la page du site partenaire, et -une caractéristique du produit ou service associe au nom de domaine ou à la page du site partenaire.

Préférentiellement, si le site distant 908 est un site partenaire 910, son ou ses offres ne sont pas affichées. Dans un mode de réalisation exemplaire, seules les informations concernant le ou les n sites partenaires proposant le meilleur prix ou les n meilleurs prix pour chaque caractéristique d'offre, sont affichées.

Ainsi, le logiciel d'assistance fournit, en plus ou à la place des protections illustrées en figures1 à 6, une assistance à la transaction par fourniture d'offres concurrentes contextuelles. Par exemple, la base de données de moteur de recherche d'offres comporte :
1/ en relation avec l'adresse www.amazon.fr/olympus/OM10.htm, les données:
   - www.nomatica.com
   - www.fnac.com/photo/olympus.htm,
   - Olympus,
   - occasion,
   - 1350 euros.
2/ en relation avec l'adresse www.photopro.fr, les données:
   - www.fnac.com/photo/olympus.htm,
   - Olympus OM 10,
   - occasion,
   - 1250 euros.
3/ en relation avec l'adresse www.vidéoshop.fr/photonumérique.htm, les données:
   - www.nomatica.com
   - www.fnac.com/photo/olympus.htm,
   - Olympus OM 9,
   - neuf,
   - 2550 euros.

Lorsque l'utilisateur du terminal 912 accède à la page www.fnac.com/photo/olympus.htm, la fenêtre ouverte sur l'écran de son terminal comporte :
Neuf :
   Olympus OM 9, 2550 euros www.vidéoshop.fr/photonumérique.htm,
Occasion :
   Olympus OM10, 1250 euros, www.photopro.fr, Olympus, 1350 euros www.amazon.fr/olympus/OM10. htm. et un lien est affecté à www.vidéoshop.fr/photonumérique.htm, www.photopro.fr et www. amazon.fr/olympus/OM10.htm afin que l'utilisateur puisse consulter ces offres sur les sites partenaires ou les pages de site partenaire 910 en question, opération 958. Si la détection d'une offre du site distant 908 n'a pas lieu au cours de l'opération 954, ou à la fin de l'opération 958, l'opération 950 est réitérée.

On observe que l'affichage peut être celui d'une fenêtre ou d'une icône dans la barre d'outil qui clignote lorsqu'une offre de site partenaire existe et lorsque l'utilisateur clique sur cette icône, l'affichage d'une fenêtre qui comporte chaque offre de site tiers.

On observe que, pour la mise en oeuvre de cet exemple de réalisation, le logiciel d'assistance peut, selon deux variantes représentées en figure 7B, par des opérations à cadres en traits interrompus :
- adresser, à la base de données de moteur de recherche, une requête indiquant le nom de domaine du site visité, l'adresse de la page du site visitée ou les mots clés s'y trouvant, opération 951, à chaque changement de page ou
- interroger une base de données mise à jour à partir de la base de données du site tiers de protection 914 qui peut être conservée et mise à jour, en relation avec le site tiers de protection 914, dans le terminal 912 ou dans le serveur 906 mettant en oeuvre le logiciel d'assistance, opération 948.

## Revendications

1. Procédé de sauvegarde d'information de transaction entre un utilisateur utilisant un terminal utilisateur (100) et un site distant (150) sur un réseau informatique (120), comportant :
- une étape de détection de début de visite (207, 305, 725) du site distant par l'intermédiaire dudit terminal utilisateur,
- une étape de détection de transaction (208, 306, 732) au cours de ladite visite de site, comportant la détection d'au moins l'un des indices suivants :
• la mise en oeuvre, par ledit terminal utilisateur, d'une authentification ou une signature électronique à clés asymétriques de l'utilisateur (401),
• la détection d'au moins une séquence de symboles prédéterminée, dans une page reçue par ledit terminal utilisateur de la part du site, et
• la détermination qu'une adresse de page ou de nom de domaine du site distant correspond à au moins une adresse prédéterminée ;
- et, lorsque une transaction est détectée, une étape de mémorisation (209, 307, 726, 736, 738) en mémoire non volatile, d'une trace de pages visitées dudit site distant.

2. Procédé selon la revendication 1, **caractérisé en ce que** l'étape de détection de transaction (208, 306, 732) au cours de ladite visite de site, comporte la détection de la mise en oeuvre, par ledit terminal utilisateur, d'une authentification ou une signature électronique à clés asymétriques de l'utilisateur (401).

3. Procédé selon la revendication 2, **caractérisé en ce que**, lorsqu'une authentification ou une signature à clés asymétriques est mise en oeuvre, au cours d'une étape d'édition, au moins une portion de page dudit site distant est sélectionnée par l'utilisateur et incorporée au document signé ou authentifié.

4. Procédé selon la revendication 1, **caractérisé en ce que** l'étape de détection de transaction (208, 306, 732) au cours de ladite visite de site, comporte la détection d'au moins une séquence de symboles prédéterminée, dans une page reçue par ledit terminal utilisateur de la part du site.

5. Procédé selon la revendication 1, **caractérisé en ce que** l'étape de détection de transaction (208, 306, 732) au cours de ladite visite de site, comporte la détermination qu'une adresse de page ou de nom de domaine du site distant correspond à au moins une adresse prédéterminée.

6. Procédé selon la revendication 5, **caractérisé en ce que** la détermination qu'une adresse de page ou de nom de domaine du site distant correspond à au moins une adresse prédéterminée comporte une étape de détection qu'une racine d'adresse correspond à un mode de communication encrypté (780).

7. Procédé selon l'une quelconque des revendications 5 ou 6, **caractérisé en ce que** la détermination qu'une adresse de page ou de nom de domaine du site distant correspond à au moins une adresse prédéterminée comporte une étape de détection que ladite adresse ou ledit nom de domaine correspond à une séquence de symboles conservée dans une base de données (732).

8. Procédé selon l'une quelconque des revendications 5 à 7, **caractérisé en ce que** la détermination qu'une adresse de page ou de nom de domaine du site distant correspond à au moins une adresse prédéterminée comporte une étape de détermination si le site distant est répertorié dans une base de données et si le site distant est répertorié dans la base de données, une étape de détermination de ce qu'une adresse de page ou de nom de domaine de site distant correspond à au moins une adresse de page ou de nom de domaine conservé dans ladite base de données en relation avec un identifiant dudit site distant (732).

9. Procédé selon la revendication 8, **caractérisé en ce qu'**il comporte, si le site distant n'est pas répertorié dans la base de données, une étape de détermination de la mise en oeuvre d'un mode de communication encrypté (780) et/ou de la visite d'une page d'un site différent dudit site distant correspondant à un site de transaction prédéterminé en cours de la visite dudit site distant ou immédiatement à la suite de la visite dudit site distant.

10. Procédé selon l'une quelconque des revendications 1 à 9, **caractérisé en ce qu'**il comporte, à partir de l'étape de détection de début de visite du site distant, une étape de constitution de ladite trace (720 à 725, 726 à 742) et, lorsque aucune transaction n'est détectée, une étape d'effacement de ladite trace (725).

11. Procédé selon l'une quelconque des revendications 1 à 10, **caractérisé en ce qu'**il comporte une étape de détection de fin de transaction (744), par détection de la sortie du site distant ou de sites prédéterminés liés audit site distant.

12. Procédé selon l'une quelconque des revendications 1 à 11, **caractérisé en ce que** l'étape de détection de début de visite comporte une étape de détermination d'une adresse de page visitée et au moins l'une des étapes suivantes :
- une étape de détermination que cette adresse correspond à une page d'un site différent du site précédemment visité, et
- une étape de comparaison de ladite adresse avec des adresses conservées dans une base de données.

13. Procédé selon l'une quelconque des revendications 1 à 12, **caractérisé en ce que**, au cours de l'étape de mémorisation en mémoire non volatile, la trace de pages visitées est représentative de toutes les pages du site distant qui ont été visitées depuis l'étape de détection de début de visite.

14. Procédé selon l'une quelconque des revendications 1 à 13, **caractérisé en ce qu'**il comporte une étape de sélection, par un utilisateur, de la conservation ou non, de traces de toutes visites sur au moins un site prédéterminé et, lorsque aucune transaction n'est détectée, ladite étape de mémorisation en mémoire non volatile n'est effectuée que si, pour le site distant, l'utilisateur a sélectionné, au cours de ladite étape de sélection, qu'une trace soit mémorisée.

15. Procédé selon l'une quelconque des revendications 1 à 14, **caractérisé en ce qu'**il comporte, lorsqu'une transaction est détectée, une étape de mise à disposition de l'utilisateur d'information contextuelle dépendant dudit site distant (740).

16. Procédé selon l'une quelconque des revendications 1 à 15, **caractérisé en ce que** lorsqu'une étape de mémorisation en mémoire non volatile d'une trace de pages visitées sur ledit site distant est effectuée, une trace d'au moins une page prédéterminée dudit site est mémorisée, même si ladite page prédéterminée n'a pas été visitée (736, 738).

17. Procédé selon l'une quelconque des revendications 1 à 16, **caractérisé en ce que**, au cours de ladite étape de mémorisation en mémoire non volatile, et pour au moins un site distant prédéterminé, une trace de pages d'un site précédemment visité différent dudit site distant prédéterminé, est mémorisée.

18. Procédé selon l'une quelconque des revendications 1 à 17, **caractérisé en ce que**, au cours de l'étape de mémorisation en mémoire non volatile, ladite trace de pages visitées comporte une information de quelles parties de ladite page ont été affichées par le terminal utilisateur.

19. Procédé selon l'une quelconque des revendications 1 à 18, **caractérisé en ce que**, au cours de l'étape de mémorisation en mémoire non volatile, ladite trace de pages visitées ne représente que des parties de pages qui ont été affichées par le terminal utilisateur.

20. Procédé selon l'une quelconque des revendications 1 à 19, **caractérisé en ce que** ladite étape de mémorisation en mémoire non volatile comporte une étape de compression d'images affichées par le terminal utilisateur.

21. Procédé selon l'une quelconque des revendications 1 à 20, **caractérisé en ce que** ladite étape de mémorisation en mémoire non volatile comporte une étape de transmission de ladite trace ou d'un certificat d'intégrité de ladite trace à une mémoire distante.

22. Procédé selon l'une quelconque des revendications 1 à 21, **caractérisé en ce qu'**il comporte une étape de transmission audit site distant d'un signal prédéterminé représentatif de la mise en oeuvre dudit procédé.

23. Procédé selon l'une quelconque des revendications 1 à 22, **caractérisé en ce que** l'étape de détection de transaction et/ou l'étape de détection de début de visite n'est effectuée que pour certains sites distants prédéterminés.

## Patentansprüche

1. Methode des Schutzes von Transaktionsinformationen zwischen einem Benutzer, der ein Benutzerendgerät (100) verwendet, und einer entfernten Website (150) in einem Netz (120), umfasst:
- eine Etappe des Nachweises des Beginns eines Besuchs (207, 305, 725) auf einer entfernten Website durch die Vermittlung des besagten Benutzerendgeräts,
- eine Etappe des Nachweises der Transaktion (208, 306, 732) während des besagten Besuchs der Website, die wenigstens den Nachweis eines der folgenden Anzeichen umfasst:
• die durch das besagte Benutzerendgerät erfolgende Ausführung einer Authentifizierung oder einer elektronischen Unterschrift mit asymmetrischer Public-Key-Verschlüsselung des Benutzers (401).
• den Nachweis von wenigstens einer vorab bestimmten Symbolfolge auf einer Seite, die von dem besagten Benutzerendgerät von der Website empfangen wurde, und
• die Bestimmung einer Seitenadresse oder eines Domain-Namens der entfernten Website, die mit wenigstens einer vorab bestimmten Adresse übereinstimmen; und, wenn eine Transaktion nachgewiesen wurde, eine Etappe der Speicherung (209, 307, 726, 738) im nicht flüchtigen Speicher, einer Spur besuchter Seiten der besagten entfernten Website.

2. Eine Methode gemäß Anspruch 1, die **dadurch gekennzeichnet ist, dass** sie die Etappe des Nachweises der Transaktion (208, 306, 732) während des besagten Besuchs der Site, den Nachweis der Ausführung einer Authentifizierung oder einer elektronischen Unterschrift mit asymmetrischer Public-Key-Verschlüsselung des Benutzers durch das besagte Benutzerendgerät enthält (401).

3. Eine Methode gemäß Anspruch 2, die **dadurch gekennzeichnet ist, dass** während einer Etappe der Bearbeitung, wenn eine Authentifizierung oder eine asymmetrische Public-Key-Verschlüsselung ausgeführt wird, wenigstens ein Teil der Seite der besagten entfernten Website durch den Benutzer ausgewählt wird und in das unterzeichnete oder authentifizierte Dokument integriert wird.

4. Eine Methode gemäß Anspruch 1, die **dadurch gekennzeichnet ist, dass** sie die Etappe des Nachweises der Transaktion (208, 306, 732) während des besagten Besuchs der Site, den Nachweis wenigstens einer vorab bestimmten Symbolfolge, auf einer Seite, die von dem besagten Benutzerendgerät seitens der Website empfangen wurde, enthält.

5. Eine Methode gemäß Anspruch 1, die dadurch charakterisiert ist, dass die Etappe des Nachweises der Transaktion (208, 306, 732) - während des besagten Besuchs der Site - die Bestimmung enthält, dass eine Seitenadresse oder ein Domain-Name der entfernten Website mit wenigstens einer vorab bestimmten Adresse übereinstimmen.

6. Eine Methode gemäß Anspruch 5, die **dadurch gekennzeichnet ist, dass** die Bestimmung einer Seitenadresse oder eines Domain-Namens der entfernten Website, die mit wenigstens einer vorab bestimmten Adresse übereinstimmen, eine Etappe des Nachweises umfasst, dass die Wurzel einer Adresse mit einem verschlüsselten Kommunikationsmodus übereinstimmt (780).

7. Eine Methode gemäß irgendeinem der Ansprüche 5 oder 6, die **dadurch gekennzeichnet ist, dass** die Bestimmung, dass eine Seitenadresse oder ein Domain-Namens der entfernten Website mit wenigstens einer vorab bestimmten Adresse übereinstimmen, eine Etappe des Nachweises enthält, dass die besagte Adresse oder der besagte Domain-Name mit einer Symbolfolge übereinstimmt, die in einer Datenbank aufbewahrt wird (732).

8. Eine Methode gemäß irgendeinem der Ansprüche 5 bis 7, die dadurch charakterisiert ist, dass die Bestimmung, dass eine Seitenadresse oder ein Domain-Namens der entfernten Website mit wenigstens einer vorab bestimmten Adresse übereinstimmen, eine Etappe des Nachweises enthält, ob die entfernte Website in einer Datenbank registriert ist und wenn die entfernte Website in der Datenbank registriert ist, dann stimmt eine Etappe der Bestimmung, dass eine Seitenadresse oder ein Domain-Name der entfernten Website mit mindestens einer Seitenadresse oder einem Domain-Namen, der in der besagten Datenbank bewahrt wird, überein, in Verbindung mit einem Identifikator der besagten entfernten Website (732).

9. Eine Methode gemäß des Anspruches 8, die **dadurch gekennzeichnet ist, dass** sie, wenn die entfernte Website nicht in der Datenbank registriert ist, eine Etappe der Bestimmung der Ausführung eines verschlüsselten Kommunikationsmodus (780) und/oder des Besuchs einer Seite einer Website enthält, die sich von der besagten entfernten Website unterscheidet und mit einer vorbestimmten Transaktions-Website übereinstimmt, während eines Besuchs der besagten entfernten Website oder sofort nach dem Besuch der besagten entfernten Website.

10. Eine Methode gemäß irgendeinem der Ansprüche 1 bis 9, die **dadurch gekennzeichnet ist, dass** sie ausgehend von der Etappe des Nachweises des Beginns eines Besuchs auf der entfernten Website, eine Etappe des Aufbaus der besagten Spur (720 bis 725, 726 bis 742) umfasst, und wenn keine Transaktion nachgewiesen wird, eine Etappe der Löschung der besagten Spur (725).

11. Eine Methode gemäß irgendeinem der Ansprüche 1 bis 10, die **dadurch gekennzeichnet ist, dass** die Etappe des Nachweises des Endes einer Transaktion (744) enthält, durch den Nachweis des Verlassens der entfernten Website oder der vorab bestimmten Websites, die mit der besagten entfernten Website verknüpft sind.

12. Eine Methode gemäß irgendeinem der Ansprüche 1 bis 11, die **dadurch gekennzeichnet ist, dass** die Etappe des Nachweises des Beginns eines Besuchs eine Etappe der Bestimmung einer besuchten Seitenadresse und wenigstens eine der folgenden Etappen enthält:
- eine Etappe der Bestimmung, dass diese Adresse mit einer Seite einer Website übereinstimmt, die sich von der vorher besuchten unterscheidet, und eine Etappe des Vergleichs der besagten Adresse mit den in einer Datenbank bewahrten Adressen.

13. Eine Methode gemäß irgendeinem der Ansprüche 1 bis 12, die **dadurch gekennzeichnet ist, dass** die Spur der besuchten Seiten - während einer Etappe der Speicherung im nicht flüchtigen Speicher - repräsentativ für alle Seiten der entfernten Website ist, die während der Etappe des Nachweises des Beginns des Besuchs besucht wurden.

14. Eine Methode gemäß einem der Ansprüche 1 bis 13, die **dadurch gekennzeichnet ist, dass** sie eine Etappe der Auswahl durch den Benutzer enthält, ob Spuren aller Besuche auf wenigstens einer vorab bestimmten Website bewahrt werden sollen, wenn keine Transaktion nachgewiesen wurde. Die besagte Etappe der Speicherung im nicht flüchtigen Speicher wird durch die entfernte Website nur ausgeführt, wenn der Besucher während der besagten Etappe der Auswahl ausgewählt hat, dass eine Spur gespeichert wird.

15. Eine Methode gemäß irgendeinem der Ansprüche 1 bis 14, die **dadurch gekennzeichnet** wird, dass sie, wenn eine Transaktion nachgewiesen wird, eine Etappe enthält, bei der dem Besucher kontextuelle Information zur Verfügung gestellt wird, die von der besagten entfernten Website abhängt.

16. Eine Methode gemäß irgendeinem der Ansprüche 1 bis 15, die **dadurch gekennzeichnet ist, dass** sie, wenn eine Etappe der Speicherung im nicht flüchtigen Speicher einer Spur der auf der besagten entfernten Website besuchten Seiten ausgeführt wird, die Spur mindestens einer vorbestimmten Seite der besagten Website gespeichert wird, auch wenn die besagte vorab bestimmte Seite nicht besucht wurde (736, 738).

17. Eine Methode gemäß irgendeinem der Ansprüche 1 bis 16, die **dadurch gekennzeichnet ist, dass** sie, während der besagten Etappe der Speicherung im nicht flüchtigen Speicher und durch wenigstens eine vorab bestimmte entfernte Website, eine Spur der Seiten der vorher besuchten Website speichert, die sich von der besagten vorab bestimmten Website unterscheidet.

18. Eine Methode gemäß irgendeinem der Ansprüche 1 bis 17, die **dadurch gekennzeichnet ist, dass** während einer Etappe der Speicherung im nicht flüchtigen Speicher, die besagte Spur der besuchten Seiten eine Information über jene Teile der besagten Seite enthält, die von dem Benutzerendgerät angezeigt wurden.

19. Eine Methode gemäß irgendeinem der Ansprüche 1 bis 18, die **dadurch gekennzeichnet ist, dass** während einer Etappe der Speicherung im nicht flüchtigen Speicher, die besagte Spur der besuchten Seiten nur die Teile der Seiten darstellt, die von dem Benutzerendgerät angezeigt wurden.

20. Eine Methode gemäß irgendeinem der Ansprüche 1 bis 19, die **dadurch gekennzeichnet ist, dass** die besagte Etappe der Speicherung im nicht flüchtigen Speicher eine Etappe der Komprimierung der vom Benutzerendgerät angezeigten Bilder enthält.

21. Eine Methode gemäß irgendeinem der Ansprüche 1 bis 20, die **dadurch gekennzeichnet ist, dass** die besagte Etappe der Speicherung im nicht flüchtigen Speicher eine Etappe der Übertragung der besagten Spur oder ein Identitätszertifikat der besagten Spur an einen entfernten Speicher enthält.

22. Eine Methode gemäß irgendeinem der Ansprüche 1 bis 21, die **dadurch gekennzeichnet ist, dass** sie eine Etappe der Übertragung eines vorab bestimmten repräsentativen Signals für die Ausführung der besagten Methode an die besagte entfernte Website enthält.

23. Eine Methode gemäß irgendeinem der Ansprüche 1 bis 22, die **dadurch gekennzeichnet ist, dass** die Etappe des Nachweises der Transaktion oder der Etappe des Nachweises des Beginns eines Besuchs nur für bestimmte vorab festgelegte Websites durchgeführt wird.

## Claims

1. Online transaction information backup method, said transaction being held, through a network (120), between a user using a terminal (100) and a remote site (150), said method including:
- a step of detecting a start (207, 305, 725) of a visit of the remote site, by use of the terminal,
- a step of detecting a transaction (208, 306, 732) during said visit of the site, including the detection of at least one of the following:
- an implementation of an authentication method or an asymmetric keys electronic signature of the user (401),
- detecting at least one predetermined symbol sequence in a page received from the site by the terminal and
- determining that a page address or a domain name of the remote site corresponds to at least one predetermined address;
- and when a transaction is detected, a step of storing (209, 307, 726, 736, 738) in permanent memory a trace of visited pages of said remote site.

2. The method of claim 1, **characterized in that** the step of detecting a transaction (208, 306, 732) during said visit of the site, includes detecting an implementation of an authentication method or an asymmetric keys electronic signature of the user (401).

3. The method of claim 2, **characterized in that**, whenever an authentication or an asymmetric keys electronic signature is used, during a step of editing, at least one portion of page of said remote site is selected by the user and incorporated to the signed or authenticated document.

4. The method of claim 1, **characterized in that** the step of detecting a transaction (208, 306, 732) during said visit of the site, includes detecting at least one predetermined symbol sequence in a page received from the site by the terminal.

5. The method of claim 1, **characterized in that** the step of detecting a transaction (208, 306, 732) during said visit of the site, includes determining that a page address or a domain name of the remote site corresponds to at least one predetermined address.

6. The method of claim 5, **characterized in that** the step of determining that a page address or a remote site domain name corresponds to at least one predetermined address includes a step of detecting that an address root corresponds to an encrypted communication mode (780).

7. The method of either one of claims 5 or 6, **characterized in that** the step of determining that a page address or a remote site domain name corresponds to at least one predetermined address includes a step of detecting that said address or said remote site domain name corresponds to a symbol sequence stored in a database (732).

8. The method of any one of claims 5 to 7, **characterized in that** the step of determining that a page address or a remote site domain name corresponds to at least one predetermined address includes a step of determining if the remote site is listed in a database and if the remote site is listed in the database, a step of determining that a page address or a domain name of the visited site corresponds to at least one page address or a domain name stored in said database in relation with an identifier of said remote site (732).

9. The method of claim 8, **characterized in that** it includes, if the remote site is not listed in the database, a step of determining that an encrypted communication mode is used (780) and/or that the visit of a page of a site different from the remote site corresponds to a predetermined transaction site during the visit of the remote site or immediately after the visit of the remote site.

10. The method of any one of claims 1 to 9, **characterized in that** it includes a step of setting up the trace (720 to 725, 726 to 742) from the detection of the start of a visit, and when no transaction is detected, a step of deleting said trace (725).

11. The method of any one of claims 1 to 10, **characterized in that** it includes a step of detecting an end of transaction (744), by detecting an exit from the remote site or from predetermined sites linked to the remote site.

12. The method of any one of claims 1 to 11, **characterized in that** the step of detecting a start of a visit includes a step of determining a visited page address and at least one of the following steps:
- a step of determining that this address corresponds to a page of a site different from the previously visited site and
- a step of comparing said address with addresses stored in a database.

13. The method of any one of claims 1 to 12, **characterized in that**, during the step of storing in permanent memory, the visited pages trace is representative of all the pages of the remote site that have been visited from the detection of the visit start.

14. The method of any one of claims 1 to 13, **characterized in that** it includes a step of selecting, by the user, whether or not to store the traces of all visits on at least one predetermined site and when no transaction is detected, the step of storing in permanent memory is performed only if, for the remote site concerned, the user has selected, during the step of selecting, that a trace should be stored.

15. The method of any one of claims 1 to 14, **characterized in that** it includes, when a transaction is detected, a step of making contextual information related to said remote site available to the user (740).

16. The method of any one of claims 1 to 15, **characterized in that**, when a step of storing in permanent memory a trace of visited pages of said remote site is performed, a trace of at least one predetermined page of said remote site is stored, even if said predetermined page has not been visited (736, 738).

17. The method of any one of claims 1 to 16, **characterized in that**, during said step of storing in permanent memory, and for at least one predetermined remote site, a trace of pages of a previously visited site, different from said remote site, is stored.

18. The method of any one of claims 1 to 17, **characterized in that**, during the step of storing in permanent memory, said trace of visited pages includes information on which portions of said pages have been displayed by the terminal.

19. The method of any one of claims 1 to 18, **characterized in that**, during the step of storing in permanent memory, said trace of visited pages represents only portions of pages that have been displayed by the terminal.

20. The method of any one of claims 1 to 19, **characterized in that** said step of storing in permanent memory includes a step of compressing images displayed by the terminal.

21. The method of any one of claims 1 to 20, **characterized in that** said step of storing in permanent memory includes a step of transmitting to a remote memory said trace or an integrity certificate of said trace.

22. The method of any one of claims 1 to 21, **characterized in that** it includes a step of transmitting to said remote site a predetermined signal representative of the implementation of said method.

23. The method of any one of claims 1 to 22, **characterized in that** the step of detecting a transaction and/or the step of detecting a visit start is performed only for predetermined remote sites.
